# EUROPEAN PATENT APPLICATION

(11) **EP 4 503 793 A1**
(43) Date of publication of application: **05.02.2025**
(21) Application number: 22932687.1
(22) Date of filing: 24.03.2022
(51) Int. Cl.: H04W 72/04

(54) **DMRS PORT INDICATION METHOD AND APPARATUS THEREFOR**

(71) Applicant: Beijing Xiaomi Mobile Software Co., Ltd., Beijing 100085 (CN)
(72) Inventor: GAO, Xueyuan, Beijing 100085 (CN)
(74) Representative: Dehns Germany Partnerschaft mbB
(86) International application number: PCT/CN2022/082868
(87) International publication number: WO 2023/178622

(57) **Abstract**

Disclosed in the embodiments of the present application are a DMRS port indication method and an apparatus therefor. The method comprises: in response to the maximum number N of uplink data transmission layers corresponding to physical uplink shared channel (PUSCH) transmission supported by a single terminal device being equal to eight, determining a DMRS port configuration table for a first uplink data transmission layer on the basis of a DMRS type parameter, wherein the DMRS port configuration table comprises a DMRS port allocation set defined for the first uplink data transmission layer; and on the basis of the DMRS port configuration table, indicating, to the terminal device, one or more DMRS ports allocated for the PUSCH transmission. By means of the method, the problem of allocating a DMRS port to a single terminal device when the uplink of the terminal device is enhanced to eight layers is solved.

## Description

### TECHNICAL FIELD

The present application relates to the field of communication technologies, and more particularly, to a method and an apparatus for indicating a demodulation reference signal (DMRS) port.

### BACKGROUND

In order to adapt to the current service or scenario, the number of uplink transmission layers of a terminal can be increased to eight layers for supporting a higher uplink transmission rate comparable to a downlink transmission rate. When the uplink transmission layers of the terminal are increased to eight layers, the issue of how to realize DMRS port allocation for the single user multiple input multiple output (SU-MIMO) supporting up to eight uplink transmission layers under an enhanced cyclic prefix orthogonal frequency division multiplexing (CP-OFDM) waveform remains unsolved.

### SUMMARY

Embodiments of the present application provide a method and an apparatus for indicating a demodulation reference signal (DMRS) port, which may solve a problem of allocating a DMRS port to a single terminal when uplink transmission layers of the terminal is increased to eight layers.

In a first aspect, an embodiment of the present application discloses a method for indicating a DMRS port which is applicable to a network device, and the method includes: in response to a maximum number N of uplink data transmission layers corresponding to a physical uplink shared channel (PUSCH) transmission supported by a single terminal being equal to eight, determining a DMRS port configuration table for a first uplink data transmission layer based on a DMRS type parameter, in which the DMRS port configuration table includes a DMRS port allocation set defined for the first uplink data transmission layer; and indicating, based on the DMRS port configuration table, one or more DMRS ports allocated for the PUSCH transmission to the terminal.

The embodiments of the present application provide a method for indicating a DMRS port, when the maximum number of uplink data transmission layers supported by the single terminal is eight, the DMRS port configuration table is configured for the first uplink data transmission layer based on a DMRS type, and one or more required DMRS ports are allocated for the PUSCH transmission based on the configured DMRS port configuration table. In the embodiments of the present application, a plurality of configuration modes for configuring the DMRS port configuration table for a newly added uplink data transmission layer are provided, and a blank space of configuring the required DMRS port configuration table for the newly added uplink data transmission layer is filled, so as to provide a basis for enhancing an uplink sending capability. Moreover, the terminal can be allocated with the required DMRS port for the PUSCH transmission based on the configured DMRS port configuration table, which is beneficial to avoid the conflict between the PUSCH and the DMRSs of other scheduled terminal.

In a second aspect, an embodiment of the present application provides a method for indicating a DMRS port, the method is applicable to a terminal, and the method includes: in response to a maximum number N of uplink data transmission layers corresponding to a physical uplink shared channel (PUSCH) transmission supported by the terminal being equal to eight, determining a DMRS port configuration table for a first uplink data transmission layer based on a DMRS type parameter, in which the DMRS port configuration table includes a DMRS port allocation set defined for the first uplink data transmission layer; and receiving indication information sent by a network device, and acquiring, based on the indication information, one or more DMRS ports allocated for the PUSCH transmission of the terminal from the DMRS port configuration table.

With the method for indicating a DMRS port provided in the embodiments of the present application, when the maximum number of uplink data transmission layers supported by the single terminal is eight, the DMRS port configuration table is configured for the first uplink data transmission layer based on a DMRS type, and one or more required DMRS ports are allocated for the PUSCH transmission based on the configured DMRS port configuration table. In the embodiments of the present application, a plurality of configuration modes for configuring the DMRS port configuration table for a newly added uplink data transmission layer are provided, and a blank space of configuring the required DMRS port configuration table for the newly added uplink data transmission layer is filled, so as to provide a basis for enhancing an uplink sending capability. Moreover, the terminal can be allocated with the required DMRS port for the PUSCH transmission based on the configured DMRS port configuration table, which is beneficial to avoid the conflict between the PUSCH and the DMRSs of other scheduled terminal.

In a third aspect, an embodiment of the present application provides a communication apparatus which has some or all of functions of the network device in the method example described in the above-mentioned first aspect, for example, the functions of the communication apparatus may have the functions in some or all of the embodiments of the present application, or may have the functions for separately implementing any of the embodiments of the present application. The functions may be implemented by hardware, or may be implemented by hardware executing corresponding software. The hardware or software includes one or more units or modules corresponding to the functions described above.

In one implementation, the structure of the communication apparatus may include a transceiver module, and a processing module configured to support the communication apparatus to perform corresponding functions of the method described above. The transceiver module is used for supporting communication between the communication apparatus and other devices. The communication apparatus may further include a storage module for coupling with the transceiver module and the processing module, which stores computer programs and data necessary for the communication apparatus.

By way of example, the processing module may be a processor, the transceiver module may be a transceiver or a communication interface, and the storage module may be a memory.

In a fourth aspect, an embodiment of the present application provides another communication apparatus which has some or all of functions of the terminal in the method example described in the above-mentioned second aspect, for example, the functions of the communication apparatus may have the functions in some or all of the embodiments of the present application, or may have the functions for separately implementing any of the embodiments of the present application. The functions may be implemented by hardware, or may be implemented by hardware executing corresponding software. The hardware or software includes one or more units or modules corresponding to the functions described above.

**In** one implementation, the structure of the communication apparatus may include a transceiver module, and a processing module configured to support the communication apparatus to perform corresponding functions of the method described above. The transceiver module is used for supporting communication between the communication apparatus and other devices. The communication apparatus may further include a storage module for coupling with the transceiver module and the processing module, which stores computer programs and data necessary for the communication apparatus.

By way of example, the processing module may be a processor, the transceiver module may be a transceiver or a communication interface, and the storage module may be a memory.

**In** a fifth aspect, an embodiment of the present application provides a communication apparatus, the communication apparatus includes a processor which, when calling a computer program in a memory, executes the method in the above-mentioned first aspect.

**In** a sixth aspect, an embodiment of the present application provides a communication apparatus, the communication apparatus includes a processor which, when calling a computer program in a memory, executes the method in the above-mentioned second aspect.

**In** a seventh aspect, an embodiment of the present application provides a communication apparatus, the communication apparatus includes a processor and a memory, the memory stores a computer program, and the processor executes the computer program stored in the memory, such that the communication apparatus executes the method in the above-mentioned first aspect.

**In** an eighth aspect, an embodiment of the present application provides a communication apparatus, the communication apparatus includes a processor and a memory, the memory stores a computer program, and the processor executes the computer program stored in the memory, such that the communication apparatus executes the method in the above-mentioned second aspect.

In a ninth aspect, an embodiment of the present application provides a communication apparatus, the apparatus includes a processor and an interface circuit, the interface circuit is used for receiving code instructions and transmitting the code instructions to the processor, and the processor is used for running the code instructions, such that the apparatus executes the method in the above-mentioned first aspect.

In a tenth aspect, an embodiment of the present application provides a communication apparatus, the apparatus includes a processor and an interface circuit, the interface circuit is used for receiving code instructions and transmitting the code instructions to the processor, and the processor is used for running the code instructions, such that the apparatus executes the method in the above-mentioned second aspect.

In an eleventh aspect, an embodiment of the present application provides a computer-readable storage medium used for storing instructions used by the above-mentioned receiving device, and the instructions, when executed, enable the receiving device to execute the method in the above-mentioned first aspect.

In a twelfth aspect, an embodiment of the present application provides a readable storage medium used for storing instructions used by the above-mentioned transmitting device, and the instructions, when executed, enable the transmitting device to execute the method in the above-mentioned second aspect.

### BRIEF DESCRIPTION OF THE DRAWINGS

In order to describe technical solutions in embodiments of the present application or the background art more clearly, accompanying drawings required to be used in the embodiments of the present application or the background art will be described below.
Figure 1 is a schematic diagram of an architecture of a communication system provided in an embodiment of the present application;
Figure 2 is a schematic flowchart of a method for indicating a DMRS port provided in an embodiment of the present application;
Figure 3 is a schematic flowchart of a method for indicating a DMRS port provided in an embodiment of the present application;
Figure 4 is a schematic flowchart of a method for indicating a DMRS port provided in an embodiment of the present application;
Figure 5 is a schematic flowchart of a method for indicating a DMRS port provided in an embodiment of the present application;
Figure 6 is a schematic flowchart of a method for indicating a DMRS port provided in an embodiment of the present application;
Figure 7 is a schematic flowchart of a method for indicating a DMRS port provided in an embodiment of the present application;
Figure 8 is a schematic flowchart of a method for indicating a DMRS port provided in an embodiment of the present application;
Figure 9 is a schematic flowchart of a method for indicating a DMRS port provided in an embodiment of the present application;
Figure 10 is a schematic flowchart of a method for indicating a DMRS port provided in an embodiment of the present application;
Figure 11 is a schematic flowchart of a method for indicating a DMRS port provided in an embodiment of the present application;
Figure 12 is a schematic block diagram of a communication apparatus provided in an embodiment of the present application;
Figure 13 is a schematic block diagram of a communication apparatus provided in an embodiment of the present application; and
Figure 14 is a schematic block diagram of a chip provided in an embodiment of the present application.

### DETAILED DESCRIPTION

Reference will now be made in detail to the exemplary embodiments, examples of which are illustrated in the accompanying drawings. Where the following description refers to the accompanying drawings, like numbers in different drawings indicate the same or similar elements, unless otherwise indicated. The implementations described in the following exemplary embodiments do not represent all implementations consistent with the present disclosure. Rather, they are merely examples of apparatus and methods consistent with some aspects of the present disclosure as detailed in the appended claims.

The terminology used in the embodiments of the disclosure is for the purpose of describing particular embodiments only and is not intended to be limiting of the embodiments of the disclosure. As used in the embodiments of the present disclosure and the appended claims, the singular forms "a", "an", and "the" are intended to include the plural forms as well, unless the context clearly indicates otherwise. It should also be understood that the term "and/or" as used herein refers to and encompasses any and all possible combinations of one or more of the associated listed items.

It should be understood that, although the terms first, second, third, etc. may be used in describing various information in embodiments of the present disclosure, such information should not be limited to these terms. These terms are only used to distinguish one type of information from another. For example, first information may also be referred to as second information, and similarly, second information may also be referred to as first information, without departing from the scope of embodiments of the present disclosure. According to the context, the word "if" as used herein may be interpreted as "when" or "while" or "in response to a determining".

For purposes of brevity and ease of understanding, the terms "greater than" or "less than", "higher than" or "lower than" are used herein when characterizing size relationships. However, for a person skilled in the art, it can be understood that: the term "greater than" also encompasses the meaning of "greater than or equal to", and "less than" also encompasses the meaning of "less than or equal to"; the term "higher than" encompasses the meaning of "higher than equal to" and "lower than" encompasses the meaning of "lower than equal to".

For facilitating understanding, firstly, terms involved in the present application are introduced.

### 1. Demodulation Reference Signal (DMRS)

DMRS is a demodulation reference signal used for channel estimation and associated demodulation of a physical channel, and the DMRS can be mapped to physical channels such as Physical Broadcast Channel (PBCH), Physical Downlink Control Channel (PDCCH,) Physical Downlink Shared Channel (PDSCH), Physical Uplink Control Channel (PUCCH) and Physical Uplink Shared Channel (PUSCH). In a medium/high-speed scenario, in addition to a front-load DMRS, it is necessary to insert more additional DMRS symbols within a scheduling duration to meet an estimation accuracy for channel time-varying. In the new radio (NR) system, a DMRS structure combining the front-load DMRS with an additional DMRS whose time density is configurable is adopted. The accuracy of channel estimation can be improved by configuring the additional DMRS. According to a specific usage scenario, up to three groups of additional DMRSs can be configured for each scheduling. Therein, DMRS patterns are classified into two types, including type 1 and type 2, and a length of OFDM symbols occupied by the DMRS of each type can be 1 or 2.

### 2. DMRS Port Indication

When scheduling data, such as scheduling data of the physical uplink shared channel (PUSCH), a network device needs to indicate a corresponding DMRS port, including the number of DMRS ports and a port number of each DMRS port. Physical resources occupied by different DMRS ports corresponding to a same DMRS port number are orthogonal; and the physical resources include one or more of spatial resources, time domain resources and frequency domain resources.

The DMRS design principles of the data channel (PDSCH/PUSCH) in the NR system mainly include the following aspects:
- Front-load DMRS: in order to reduce a demodulation and decoding delay, the DMRS of the data channel (PDSCH/PUSCH) in the NR system uses a so-called front-load design concept. Within each scheduling time unit, a location of a first occurrence of the DMRS should be as close as possible to a starting point of the scheduling. The usage of the front-load DMRS, which facilitates fast channel estimation, reception and detection at the receiving side, plays an important role in reducing the delay and supporting a so-called self-contained structure. According to the total number of orthogonal DMRS ports, the front-load DMRS can occupy up to two consecutive OFDM symbols.
- Additional DMRS: for low mobility scenarios, the front-load DMRS can achieve channel estimation performance that meets demodulation requirements with lower overhead. However, a movement speed considered by the NR system can be up to 500km/h. Regarding such a large dynamic range of mobility, in addition to the front-load DMRS, in medium/high-speed scenarios, it is necessary to insert more DMRS symbols within the scheduling duration to meet the estimation accuracy of channel time-varying. In order to solve this problem, the NR system adopts a DMRS structure combining the front-load DMRS and the additional DMRS whose time density is configurable. The pattern for each group of additional DMRS is a repetition of that the front-load DMRS. Thus, in accordance with the front-load DMRS, each group of additional DMRS can also occupy up to two consecutive DMRS symbols. According to a specific usage scenario, up to three groups of additional DMRSs can be configured for each scheduling. The number of additional DMRS groups that occur in the scheduling time range depends on a configuration of a higher layer signaling, an actual scheduling length and the number of front-load DMRS symbols.

Within each scheduling time unit, if an additional DMRS exists, the pattern for each group of additional DMRS is consistent with that of the front-load DMRS. Thus, the pattern design of the front-load DMRS is a basis for the DMRS design. The design ideas of the front-load DMRS can be classified into two types, the first type (type1) adopts COMB+OCC structure, and the second type (type2) is based on FDM+OCC structure.

According to the number of orthogonal ports used for transmission, the front-load DMRS can be configured as up to two OFDM symbols. In consideration of power utilization efficiency, TD-OCC is used in the time domain based on CS or OCC in the frequency domain when the front-load DMRS of two symbols is used.

In the medium/high-speed scenario, in addition to the front-load DMRS, it is necessary to insert more DMRS symbols within the scheduling duration to meet the estimation accuracy for channel time-varying. The NR system adopts a DMRS structure combining the front-load DMRS and the additional DMRS whose time density is configurable. The pattern for each group of additional DMRS is a repetition of that the front-load DMRS. Thus, in accordance with the front-load DMRS, each group of additional DMRS can also occupy up to two consecutive DMRS symbols. According to the specific usage scenario, up to three groups of additional DMRSs can be configured for each scheduling. The number of additional DMRSs depends on a higher layer parameter configuration and the specific scheduling duration.

A current protocol can only support up to four uplink transmission layers, while can support up to eight downlink layers. However, in the future, the uplink enhancement resulting in up to eight transmitting antennas will be included to support a higher uplink transmission rate comparable to the downlink transmission rate.

In the current protocol, the uplink supports DMRS port allocation of a maximum of four layers, which cannot support coherent demodulation of a higher RANK under SU, so that there is a need of DMRS port allocation for the SU-MIMO supporting up to eight uplink transmission layers under the enhanced CP-OFDM waveform.

In order to better understand the method for indicating a DMRS port disclosed in the embodiments of the present application, a communication system to which the embodiments of the present application are applicable will first be described below.

Embodiments of the present application provide a communication system that may include, but is not limited to, a transmitting device and a receiving device. Optionally, the transmitting device may be a terminal and the receiving device may be a network device.

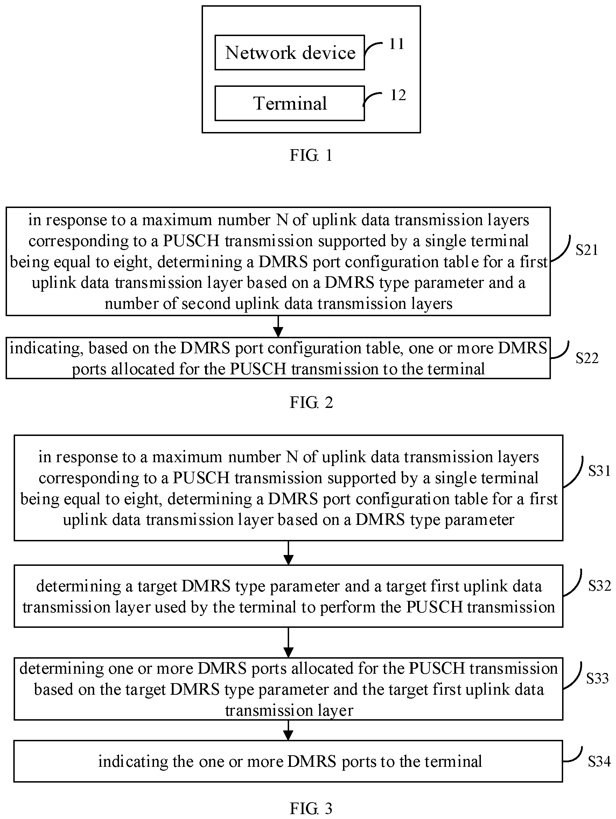

Reference is now made to FIG 1, which is a schematic diagram of an architecture of a communication system provided in an embodiment of the present application. This communication system can include, but is not limited to a network device and a terminal, the number and form of devices shown in FIG 1 are only intended to illustrate, rather than to constitute limitations on the embodiments of the present application. In actual applications, two or more network devices and two or more terminals can be included. The communication system shown in FIG 1 is illustrated to include one network device 11 and one terminal 12.

It should be noted that the technical solutions of the embodiments of the present application can be applied to various communication systems, for example, a long term evolution (LTE) system, a 5th generation (5G) mobile communication system, a 5G new radio (NR) system, or other future novel mobile communication systems.

The network device 11 in the embodiment of the present application is an entity for transmitting or receiving signals at a network side. For example, the network device 11 can be an evolved NodeB (eNB), a transmission reception point (TRP), a next generation NodeB (gNB) in the NR system, a base station in other future mobile communication systems or an access point in a wireless fidelity (WiFi) system, etc. In the embodiments of the present application, a specific technology and a specific device form that are adopted by the network device are not limited. The network device provided in the embodiment of the present application can be composed of a central unit (CU) and a distributed unit (DU), and the CU can also be referred to as a control unit, the protocol layer of the network device, such as a base station, can be split by adopting a CU-DU structure, parts of functions of the protocol layer are centrally controlled by the CU, and parts or all of remaining functions of the protocol layer are distributed in the DU, and the DU is centrally controlled by the CU.

The terminal 12 in the embodiment of the present application is an entity, such as a mobile phone, for receiving or transmitting signals. The terminal can also be referred to as a terminal, user equipment (UE), a mobile station (MS), a mobile terminal (MT), etc. The terminal can be a car with a communication function, a smart car, a mobile phone, an internet of things device such as an NB-IoT or (e)MTC, a wearable device, a tablet computer (Pad), a computer with a radio transceiver function, a virtual reality (VR) terminal, an augmented reality (AR) terminal, a radio terminal in industrial control, a radio terminal in self-driving, a radio terminal in remote medical surgery, a radio terminal in a smart grid, a radio terminal in transportation safety, a radio terminal in a smart city, a radio terminal in a smart home, etc. In the embodiments of the present application, a specific technology and a specific device form that are adopted by the terminal are not limited.

It can be understood that the communication system described in the embodiment of the present application is intended to describe the technical solutions in the embodiments of the present application more clearly, rather than to constitute a limitation on the technical solutions provided in the embodiments of the present application. It can be known by those of ordinary skill in the art that, with the evolution of a system architecture and the emergence of new service scenarios, the technical solutions provided in the embodiments of the present application is equally applicable to similar technical problems.

A method and an apparatus for indicating a DMRS port provided in the present application will be introduced in detail below in conjunction with the accompanying drawings.

Reference is now made to FIG 2, which is a schematic flowchart of a method for indicating a DMRS port provided by an embodiment of the present application. As shown in FIG 2, the method is performed by a network device, and may include, but is not limited to, the following steps.

In S21, in response to a maximum number N of uplink data transmission layers corresponding to a PUSCH transmission supported by a single terminal being equal to eight, a DMRS port configuration table is determined for a first uplink data transmission layer based on a DMRS type parameter and a number of second uplink data transmission layers.

Here, the first uplink data transmission layer refers to a newly added uplink data transmission layer on a basis of the uplink data transmission layers corresponding to the PUSCH transmission originally supported by the single terminal. For example, the original uplink data transmission layers corresponding to the PUSCH are layers 1-4, and are newly added to eight layers, namely, the first uplink transmission layers may be layers 5-8. An original uplink data transmission layer corresponding to the PUSCH can be referred to as a second uplink data transmission layer, namely, the second uplink data transmission layers may be layers 1-4. This definition applies to all embodiments of the present disclosure.

Note that if the number of the uplink data transmission layers of the single terminal is enhanced from four to eight, the uplink data transmission layers include the newly added first uplink data transmission layers and the original second uplink data transmission layers. The first uplink data transmission layers include: values of a RANK Indicator (RI) of 5, 6, 7 and 8, namely, RI=5, RI=6, RI=7 and RI=8, which means that the first uplink data transmission layers include the newly added data transmission layers, and may include the newly added 5th layer, 6th layer, 7th layer and 8th layer. The second uplink data transmission layers include: values of the RI of 1, 2, 3 and 4, namely, RI=1, RI=2, RI=3 and RI=4, which means that the second uplink data transmission layers include the original data transmission layers, and can include the original 1st layer, 2nd layer, 3rd layer and 4th layer. Different RIs correspond to different uplink data transmission layers.

In the embodiments of the present application, the DMRS type parameter may include a DMRS type, or a DMRS type and a maximum number of symbols of a front-load DMRS. The DMRS type includes type 1 and type 2, and the maximum number of symbols of the front-load DMRS includes 1 or 2. The type and the maximum number of symbols of the front-load DMRS can be combined to obtain four DMRS type parameters, including: the DMRS type of type 1, with FL DMRS=1; the DMRS type of type 1, with FL DMRS=2; the DMRS type of type 2, with FL DMRS=1; and the DMRS type of type 2, with FL DMRS=2.

Optionally, a DMRS port allocation set defined for the first uplink data transmission layer is included in the DMRS port configuration table. The DMRS port allocation set includes one DMRS port or a plurality of DMRS ports available for the first uplink data transmission layer.

Optionally, one or more parameters of the DMRS type parameter may also be included in the DMRS port configuration table, for example, the DMRS type can be included, or the maximum number of symbols of the front-load DMRS can be included, or the DMRS type and the maximum number of symbols of the front-load DMRS can be included.

Optionally, the DMRS port configuration table may also include a quantity of code division multiplexings (CDMs) that do not carry data.

Optionally, the number of table rows, i.e. the value of the row, in the DMRS port configuration table may be used to index to one or more DMRS ports.

As a possible implementation, for each first uplink data transmission layer, first DMRS port configuration tables respectively corresponding to different DMRS type parameters may be generated for the first uplink data transmission layer. That is, for each first uplink data transmission layer, a plurality of first DMRS port configuration tables may be configured, in which each first DMRS port configuration table corresponds to one DMRS type parameter.

It should be noted that in the case where the DMRS type is type 1 and the maximum number of symbols of the front-load DMRS is one, since the maximum number of allocable ports is four, the network device cannot configure the DMRS port allocation table for the first uplink transmission layers, namely, layers 5-8.

For example, for RI=5, in the case where the DMRS type is type 1 and FL DMRS=2, a first DMRS port configuration table 1 can be generated; in the case where the DMRS type is type 2 and FL DMRS=1, a first DMRS port configuration table 2 can be generated; and in the case where the DMRS type is type 2 and FL DMRS=2, a first DMRS port configuration table 3 can be generated.

For example, for RI=5, the first DMRS port configuration table in the case where the DMRS type is type 1 and FL DMRS=2 is as shown in Table 1 below:

**Table 1**

| Two Codewords 0 indicates enabled, while 1 indicates disabled | | | |
|---|---|---|---|
| Row No. | DMRS CDM group not carrying data | DMRS port number | Maximum number of symbols of the front-load DMRS |
| 0 | 2 | 0, 1, 2, 3, 4 | 2 |
| ... | reserved | reserved | reserved |
| 15 | reserved | reserved | reserved |

For RI=6, in the case where the DMRS type is type 1 and FL DMRS=2, a first DMRS port configuration table 4 can be generated; in the case where the DMRS type is type 2 and FL DMRS=1, a first DMRS port configuration table 5 can be generated; and in the case where the DMRS type is type 2 and FL DMRS=2, a first DMRS port configuration table 6 can be generated.

For example, for RI=6, the first DMRS port configuration table in the case where the DMRS type is type 1 and FL DMRS=2 is as shown in Table 2 below:

**Table 2**

| Two Codewords 0 indicates enabled, while 1 indicates disabled | | | |
|---|---|---|---|
| Row No. (Value) | DMRS CDM group not carrying data | DMRS port number | Maximum number of symbols of the front-load DMRS |
| 0 | 2 | 0, 1, 2, 3, 4,6 | 2 |
| ... | reserved | reserved | reserved |
| 15 | reserved | reserved | reserved |

For RI=7, in the case where the DMRS type is type 1 and FL DMRS=2, a first DMRS port configuration table 7 can be generated; in the case where the DMRS type is type 2 and FL DMRS=1, a first DMRS port configuration table 8 can be generated; and in the case where the DMRS type is type 2 and FL DMRS=2, a first DMRS port configuration table 9 can be generated.

For example, for RI=7, the first DMRS port configuration table in the case where the DMRS type is type 1 and FL DMRS=2 is as shown in Table 3 below:

**Table 3**

| Two Codewords 0 indicates enabled, while 1 indicates disabled | | | |
|---|---|---|---|
| Row No. (Value) | DMRS CDM group not carrying data | DMRS port number | Maximum number of symbols of the front-load DMRS |
| 0 | 2 | 0, 1, 2, 3, 4, 5, 6 | 2 |
| ... | reserved | reserved | reserved |
| 15 | reserved | reserved | reserved |

For RI=6, in the case where the DMRS type is type 1 and FL DMRS=2, a first DMRS port configuration table 10 can be generated; in the case where the DMRS type is type 2 and FL DMRS=1, a first DMRS port configuration table 11 can be generated; and in the case where the DMRS type is type 2 and FL DMRS=2, a first DMRS port configuration table 12 can be generated.

For example, for RI=8, the first DMRS port configuration table in the case where the DMRS type is type 1 and FL DMRS=2 is as shown in Table 4 below:

**Table 4**

| Two Codewords 0 indicates enabled, while 1 indicates disabled | | | |
|---|---|---|---|
| Row No. (Value) | DMRS CDM group not carrying data | DMRS port number | Maximum number of symbols of the front-load DMRS |
| 0 | 2 | 0, 1, 2, 3, 4, 5, 6,7 | 2 |
| ... | reserved | reserved | reserved |
| 15 | reserved | reserved | reserved |

Optionally, the first DMRS port configuration table may have the same table format and the same configuration entries as the original DMRS port configuration table configured for RI=1/2/3/4.

Optionally, a total number of first DMRS port configuration tables is ten.

Optionally, the number of entries in the DMRS port allocation table corresponding to RI=5/6/7/8 may decide the number of bits indicating the ports in the downlink control information (DCI). For example, for a case where the DMRS type is type 1, FL DMRS=2, and the number of entries in the DMRS port allocation table corresponding to RANK5-8 is sixteen, then a DMRS port indication field in the DCI can be indicated by 4 bits. In some implementations, DCI0-1/0-2 may be employed to indicate the ports to the terminal.

As another possible implementation, for each DMRS type parameter, a second DMRS port configuration table corresponding to the DMRS type parameter is generated, the second DMRS port configuration table includes a first DMRS port configuration sub-table of each first uplink data transmission layer. That is, each DMRS type parameter corresponds to one second DMRS port configuration table, and each second DMRS port configuration table includes respective first DMRS port configuration sub-tables of the first uplink data transmission layers with RI=5, RI=6, RI=7 and RI=8.

For example, for the case where the DMRS type is type 1 and FL DMRS=2, one second DMRS port configuration table 1 can be generated, which includes the respective first DMRS port configuration sub-tables of the first uplink data transmission layers with RI=5, RI=6, RI=7 and RI=8.

For the case where the DMRS type is type 2 and FL DMRS=1, one second DMRS port configuration table 2 can be generated, which includes the respective first DMRS port configuration sub-tables of the first uplink data transmission layers with RI=5, RI=6, RI=7 and RI=8.

For the case where the DMRS type is type 2 and FL DMRS=2, one second DMRS port configuration table 3 can be generated, which includes the respective first DMRS port configuration sub-tables of the first uplink data transmission layers with RI=5, RI=6, RI=7 and RI=8.

For example, the second DMRS port configuration table in the case where the DMRS type is type 1 and FL DMRS=2 is as shown in Table 5 below:

**Table 5**

| Two Codewords 0 indicates enabled, while 1 indicates disabled | | | |
|---|---|---|---|
| Row No. (Value) | DMRS CDM group not carrying data | DMRS port number | Maximum number of symbols of the front-load DMRS |
| 0 | 2 | 0, 1, 2, 3, 4 | 2 |
| 1 | 2 | 0, 1, 2, 3, 4,6 | 2 |
| 2 | 2 | 0, 1, 2, 3, 4, 5, 6 | 2 |
| 3 | 2 | 0, 1, 2, 3, 4, 5, 6,7 | 2 |
| ... | reserved | reserved | reserved |
| 15 | reserved | reserved | reserved |

Optionally, the second DMRS port configuration table may have the same table format and the same configuration entries as the original DMRS port configuration table configured for RI=1/2/3/4.

Optionally, in the case where the DMRS type is type 1 and the maximum number of symbols of the front-load DMRS is one, since the maximum number of allocable ports is four, the network device cannot configure the DMRS port allocation table for the first uplink transmission layers, namely, layers 5-8, and therefore a total number of the second DMRS port configuration tables is three.

Optionally, the number of entries in the DMRS port allocation table corresponding to RI=5/6/7/8 may decide the number of bits indicating the ports in the DCI. For example, for the case where the DMRS type is type 1, FL DMRS=2, and the number of entries in the DMRS port allocation table corresponding to RANK5-8 is sixteen, the DMRS port indication field in the DCI can be indicated by 4 bits. In some implementations, DCI0-1/0-2 may be employed to indicate the ports to the terminal.

As yet another possible implementation, a sum third DMRS port configuration table is generated, and optionally, the third DMRS port configuration table includes a second DMRS port configuration sub-table of each first uplink data transmission layer for each DMRS type parameter; optionally, the third DMRS port configuration table includes a third DMRS port configuration sub-table corresponding to each DMRS type parameter for each first uplink data transmission layer. That is, for RI> 4, regarding the first uplink data transmission layers with RI=5/6/7/8, the third DMRS port configuration table may be looked up.

For example, the third DMRS port configuration table is shown in Table 6 below:

**Table 6**

| | Two Codewords 0 indicates enabled, while 1 indicates disabled | | | |
|---|---|---|---|---|
| Row No. (Value) | DMRS type | DMRS CDM group not carrying data | DMRS port number | Maximum number of symbols of the front-load DMRS |
| 0 | 1 | 2 | 0, 1, 2, 3, 4 | 2 |
| 1 | 1 | 2 | 0, 1, 2, 3, 4,6 | 2 |
| 2 | 1 | 2 | 0, 1, 2, 3, 4, 5, 6 | 2 |
| 3 | 1 | 2 | 0, 1, 2, 3, 4, 5, 6, 7 | 2 |
| 4 | 1 | reserved | reserved | reserved |
| 5 | | | | |
| 6 | | | | |
| 7 | | | | |
| 8 | 2 | 3 | 0, 1, 2, 3, 4 | 1 |
| 9 | 2 | 3 | 0, 1, 2, 3, 4,5 | 1 |
| 10 | 2 | reserved | reserved | reserved |
| ... | ... | | | |
| 15 | | reserved | reserved | reserved |
| 16 | 2 | 3 | 0, 1, 2, 3, 4 | 1 |
| 17 | 2 | 3 | 0, 1, 2, 3, 4,5 | 1 |
| 18 | 2 | 2 | 0, 1, 2, 3, 6 | 2 |
| 19 | 2 | 2 | 0, 1, 2, 3, 6,8 | 2 |
| 20 | 2 | 2 | 0, 1, 2, 3, 6, 7, 8 | 2 |
| 21 | 2 | 2 | 0, 1, 2, 3, 6, 7, 8,9 | 2 |
| 22 | | reserved | reserved | reserved |
| ... | ... | | | |
| 31 | 31 | reserved | reserved | reserved |

Optionally, the third DMRS port configuration table has the same or a different table format compared to the original DMRS port configuration table configured for RI=1/2/3/4, and/or has different configuration entries from the configuration entries included in the original DMRS port configuration table configured for RI=1/2/3/4. The total number of entries included in the third DMRS port configuration table is thirty two.

Optionally, the number of entries in the DMRS port allocation table corresponding to RI=5/6/7/8 may decide the number of bits indicating the ports in the DCI. For example, for the case where the DMRS type is type 1, FL DMRS=2, and the number of entries in the DMRS port allocation table corresponding to RANK5-8 is thirty two, the DMRS port indication field in the DCI can be indicated by 8 bits. In some implementations, DCI0-1/0-2 may be employed to indicate the ports to the terminal.

In step S22, based on the DMRS port configuration table, one or more DMRS ports allocated for the PUSCH transmission are indicated to the terminal.

In the embodiments of the present application, configuring the DMRS port configuration table for the terminal can include configuring 12 first DMRS port configuration tables, can also include configuring 3 second DMRS port configuration tables, and can also include configuring 1 third DMRS port configuration table. One of the above-mentioned implementations may be used by the network device to configure the corresponding DMRS port configuration table for the single terminal.

When the PUSCH transmission of the terminal is scheduled, an available DMRS port needs to be allocated for the PUSCH transmission, and the network device can determine the DMRS port allocated for the PUSCH transmission from the DMRS port configuration table based on the DMRS type parameter and the first uplink data transmission layer used by the terminal to perform the PUSCH transmission; optionally, the allocated DMRS ports may include one or multiple DMRS ports, the multiple DMRS ports may be a combination of DMRS ports. That is, one DMRS port or a combination of DMRS ports may be allocated for the PUSCH transmission. Namely, one or more DMRS ports are selected from a predefined DMRS port set corresponding to the used first uplink data transmission layer.

After determining to allocate one DMRS port or a combination of DMRS ports for the PUSCH transmission, the DMRS port(s) allocated for the PUSCH transmission is/are indicated to the terminal via a DMRS port indication, so that the terminal uses the one DMRS port or the combination of DMRS ports to perform the PUSCH transmission with the network device. Optionally, the one DMRS port or the combination of DMRS ports allocated for the PUSCH transmission are indicated to the terminal by means of a DMRS port indication field in the downlink control indication (DCI) signaling. The DMRS port indication field indicates the number of bits used by the one DMRS port or the combination of DMRS ports, as determined by the number of total entries occupied by the DMRS port configuration table. In some implementations, DCI0-1/0-2 may be employed to indicate, to the terminal, the one DMRS port or the combination of DMRS ports allocated for the PUSCH transmission.

With the method for indicating the DMRS port provided in the embodiments of the present application, when the maximum number of uplink data transmission layers supported by the single terminal is eight, the DMRS port configuration table is configured for the first uplink data transmission layer based on the DMRS type, and one or more required DMRS ports are allocated for the PUSCH transmission based on the configured DMRS port configuration table. In the embodiments of the present application, a plurality of configuration modes for configuring the DMRS port configuration table for a newly added uplink data transmission layer are provided, and a blank space of configuring the required DMRS port configuration table for the newly added uplink data transmission layer is filled, so as to provide a basis for enhancing an uplink sending capability. Moreover, the terminal can be allocated with the required DMRS port for the PUSCH transmission based on the configured DMRS port configuration table, which is beneficial to avoid the conflict between the PUSCH and the DMRSs of other scheduled terminals.

Reference is now made to FIG 3, which is a schematic flowchart of a method for indicating a DMRS port provided by an embodiment of the present application. As shown in FIG 3, the method is performed by a network device, and may include, but is not limited to, the following steps.

In step S31, in response to a maximum number N of uplink data transmission layers corresponding to a PUSCH transmission supported by a single terminal being equal to eight, a DMRS port configuration table is determined for a first uplink data transmission layer based on a DMRS type parameter.

The DMRS port allocation set defined for the first uplink data transmission layer is included in the DMRS port configuration table.

The DMRS port allocation set includes one DMRS port or a plurality of DMRS ports. The DMRS port allocation set contains same contents in all embodiments of the present disclosure, i.e. one or more DMRS ports.

The specific implementation of step S31 in the embodiment of the present application can be realized by using any implementation in the various embodiments of the present application, for which the relevant content can be referred to for details, and it will not be described in detail here.

In step S32, a target DMRS type parameter and a target first uplink data transmission layer used by the terminal to perform the PUSCH transmission are determined.

In an embodiment of the present application, the DMRS type parameter may include a DMRS type, or a DMRS type and a maximum number of symbols of a front-load DMRS. The DMRS type includes type 1 and type 2, and the maximum number of symbols of the front-load DMRS includes 1 or 2. The type and the maximum number of symbols of the front-load DMRS can be combined to obtain four DMRS type parameters, including: a DMRS type of type 1, with FL DMRS=1; a DMRS type of type 1, with FL DMRS=2; a DMRS type of type 2, with FL DMRS=1; and a DMRS type of type 2, with FL DMRS=2.

The terminal adopts one of the above-mentioned type parameters when performing the PUSCH transmission, and the first uplink data transmission layer used is one layer of the newly added layers with RI=5, RI=6, RI=7 and RI=8. For example, the target DMRS type parameter may be that the DMRS type is type 1, FL DMRS=2; and RI=5, i.e. the newly added 5th uplink data transmission layer.

Optionally, the network device may explicitly or implicitly determine the target DMRS type parameter and the target first uplink data transmission layer used by the terminal to perform the PUSCH transmission, which may be, for example, based on protocol agreements or upper layer indications.

Optionally, the network device may explicitly or implicitly indicate the target DMRS type parameter and the target first uplink data transmission layer to perform the PUSCH transmission to the terminal.

In step S33, one or more DMRS ports allocated for the PUSCH transmission are determined based on the target DMRS type parameter and the target first uplink data transmission layer.

As a possible implementation, the DMRS port configuration table is a first DMRS port configuration table, since there are multiple first DMRS port configuration tables, a target first DMRS port configuration table can be determined from the multiple first DMRS port configuration tables based on the target DMRS type parameter and the target first uplink data transmission layer. For example, when the DMRS type is type 1, FL DMRS=2, and RI=5, a first DMRS port configuration table 1 can be determined as the target first DMRS port configuration table from 12 first DMRS port configuration tables, and the DMRS port(s) in the target first DMRS port configuration table is/are determined as one or more DMRS ports allocated for the PUSCH transmission. For example, with reference to table 1, DMRS ports 0-4 can be determined as the DMRS ports allocated for the PUSCH transmission.

As another possible implementation, the DMRS port configuration table is a second DMRS port configuration table, since there are multiple second DMRS port configuration tables, and the second DMRS port configuration table also includes first DMRS port configuration sub-tables of four layers of RI=5/6/7/8. In an embodiment of the present application, the target first DMRS port configuration sub-table can be determined from the multiple second DMRS port configuration tables based on the target DMRS type parameter and the target first uplink data transmission layer. For example, when the DMRS type is type 1, FL DMRS=2, and RI=5, a first DMRS port configuration sub-table corresponding to RI=5 in a second DMRS port configuration table 1 can be determined from 12 first DMRS port configuration tables, and the DMRS port(s) in the target first DMRS port configuration sub-table is/are determined as one or more DMRS ports allocated for the PUSCH transmission. For example, with reference to table 5, DMRS ports 0-4 can be determined as the DMRS ports allocated for the PUSCH transmission.

As yet another possible implementation, in the case where the DMRS port configuration table is a third DMRS port configuration table, in an embodiment of the present application, a target second DMRS port configuration sub-table or a third DMRS port configuration sub-table can be determined from the third DMRS port configuration table based on the target DMRS type parameter and the target first uplink data transmission layer.

For example, the DMRS type is type 1, FL DMRS=2, and RI=5.

When the content included in the third DMRS port configuration table is in the form of the second DMRS port configuration sub-table of each first uplink data transmission layer for the DMRS type parameter, a second DMRS port configuration sub-table corresponding to RI=5/6/7/8 in the third DMRS port configuration table can be determined from the third DMRS port configuration table based on the DMRS type of type 1 and FL DMRS=2, and the second DMRS port configuration sub-table corresponding to RI=5 is taken as the target second DMRS port configuration sub-table. Further, the DMRS port(s) in the target second DMRS port configuration sub-table is/are determined as one or more DMRS ports allocated for the PUSCH transmission. For example, with reference to table 6, DMRS ports 0-4 can be determined as the DMRS ports allocated for the PUSCH transmission.

When the content included in the third DMRS port configuration table is in the form of the third DMRS port configuration sub-table corresponding to each DMRS type parameter for the first uplink data transmission layer, a third DMRS port configuration sub-table corresponding to different DMRS type parameters in the third DMRS port configuration table can be determined from the third DMRS port configuration table based on RI=5, and the third DMRS port configuration sub-table corresponding to the DMRS type of type 1 and FL DMRS=2 is taken as the target third DMRS port configuration sub-table, and the DMRS port(s) in the target third DMRS port configuration sub-table is/are determined as the one or more DMRS ports allocated for the PUSCH transmission. Reference is now made to Table 6, DMRS ports 0-4 can be determined as the DMRS ports allocated for the PUSCH transmission.

In step S34, the one or more DMRS ports are indicated to the terminal.

After determining to allocate one DMRS port or a combination of DMRS ports for the PUSCH transmission, the one or more DMRS ports allocated for the PUSCH transmission can be indicated to the terminal via the DMRS port indication, so that the terminal uses the one DMRS port or the combination of DMRS ports to perform the PUSCH transmission with the network device.

Optionally, the one or multiple DMRS ports allocated for the PUSCH transmission can be indicated to the terminal by means of a DMRS port indication field in the downlink control information (DCI) signaling, in which the multiple DMRS ports can be a combination of DMRS ports. In some implementations, DCI0-1/0-2 may be employed to indicate, to the terminal, the one DMRS port or the combination of ports allocated for the PUSCH transmission.

Optionally, the number of bits occupied by the port indication field is agreed by a protocol or configured by the network or agreed by a protocol through the DMRS type parameter. In some implementations, the DMRS port indication field indicates the number of bits used by the one or more DMRS ports, as determined by the number of total entries occupied by the DMRS port configuration table.

With the method for indicating a DMRS port provided in the embodiments of the present application, when the maximum number of uplink data transmission layers supported by the single terminal is eight, the DMRS port configuration table is configured for the first uplink data transmission layer based on a DMRS type, and one or more required DMRS ports are allocated for the PUSCH transmission based on the configured DMRS port configuration table. In the embodiments of the present application, a plurality of configuration modes for configuring the DMRS port configuration table for the first uplink data transmission layer are provided, and a blank space of configuring the required DMRS port configuration table for the first uplink data transmission layer is filled, so as to provide a basis for enhancing an uplink sending capability. Moreover, the terminal can be allocated with the required DMRS port for the PUSCH transmission based on the configured DMRS port configuration table, which is beneficial to avoid the conflict between the PUSCH and the DMRSs of other scheduled terminals.

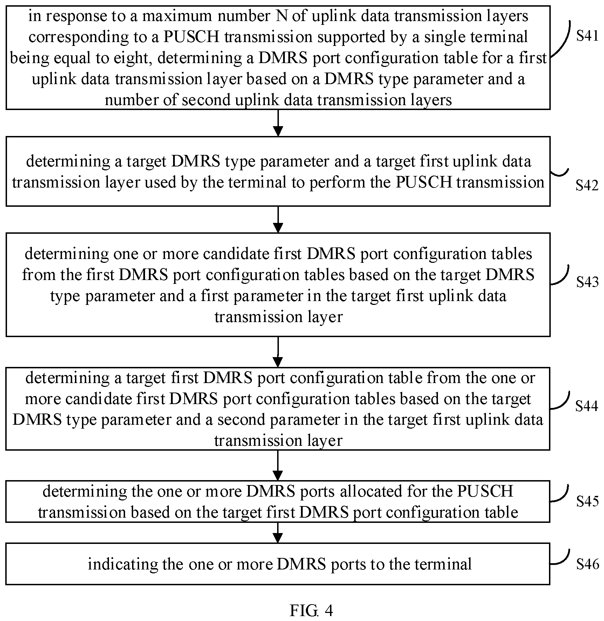

Reference is now made to FIG 4, which is a schematic flowchart of a method for indicating a DMRS port provided by an embodiment of the present application. As shown in FIG 4, the method is performed by a network device, and may include, but is not limited to, the following steps.

In step S41, in response to a maximum number N of uplink data transmission layers corresponding to a PUSCH transmission supported by a single terminal being equal to eight, a DMRS port configuration table is determined for a first uplink data transmission layer based on a DMRS type parameter and a number of second uplink data transmission layers.

The DMRS port allocation set defined for the first uplink data transmission layer is included in the DMRS port configuration table.

For each first uplink data transmission layer, first DMRS port configuration tables respectively corresponding to different DMRS type parameters may be generated for the first uplink data transmission layer. That is, each first uplink data transmission layer may be configured with a plurality of first DMRS port configuration tables, in which each first DMRS port configuration table corresponds to one DMRS type parameter.

Optionally, the first DMRS port configuration table may have the same table format and the same configuration entries as the original DMRS port configuration table configured for RI=1/2/3/4.

Optionally, a total number of first DMRS port configuration tables is ten.

In step S42, a target DMRS type parameter and a target first uplink data transmission layer used by the terminal to perform the PUSCH transmission are determined.

The specific implementation of step S42 in the embodiment of the present application can be realized by using any implementation in the various embodiments of the present application, for which the relevant content can be referred to for details, and it will not be described in detail here.

Optionally, the network device may explicitly or implicitly determine the target DMRS type parameter and the target first uplink data transmission layer used by the terminal to perform the PUSCH transmission, which may be, for example, based on protocol agreements or upper layer indications.

Optionally, the network device may explicitly or implicitly indicate the target DMRS type parameter and/or the target first uplink data transmission layer to the terminal.

In step S43, one or more candidate first DMRS port configuration tables are determined from the first DMRS port configuration tables based on the target DMRS type parameter and a first parameter in the target first uplink data transmission layer.

In step S44, a target first DMRS port configuration table is determined from the one or more candidate first DMRS port configuration tables based on the target DMRS type parameter and a second parameter in the target first uplink data transmission layer.

In some implementations, the network device determines, from the first DMRS port configuration table, the first DMRS port configuration tables of different RIs corresponding to the target DMRS type parameter as the candidate first DMRS port configuration tables, when the DMRS type parameter is the target DMRS type parameter.

By way of example, taking the case where the target DMRS type parameter can be that the DMRS type is type 1, FL DMRS=2, and the target first uplink data transmission layer is RI=5 as an example, the network device determines the first DMRS port configuration tables of different RIs under the condition that the DMRS type is type 1 and FL DMRS=2 from 12 first DMRS port configuration tables as the candidate first DMRS port configuration tables. The candidate first DMRS port configuration tables include:
a first DMRS port configuration table 1 corresponding to RI=5, DMRS type of type 1 and FL DMRS=2;
a first DMRS port configuration table 4 corresponding to RI=6, DMRS type of type 1 and FL DMRS=2;
a first DMRS port configuration table 7 corresponding to RI=7, DMRS type of type 1 and FL DMRS=2;
a first DMRS port configuration table 10 corresponding to RI=8, DMRS type of type 1 and FL DMRS=2.

Further, the network device determines the target first DMRS port configuration table from the one or more candidate first DMRS port configuration tables based on the target first uplink data transmission layer. Continuing with the above-mentioned example, the determined candidate first DMRS port configuration tables include: the first DMRS port configuration table 1, the first DMRS port configuration table 4, the first DMRS port configuration table 7 and the first DMRS port configuration table 10. Since RI=5 corresponds to the first DMRS port configuration table 1, the first DMRS port configuration table 1 is determined to be the target first DMRS port configuration table.

In other implementations, the network device determines the first DMRS port configuration tables corresponding to different DMRS type parameters for the target first uplink data transmission layer from the first DMRS port configuration tables as the candidate first DMRS port configuration tables.

By way of example, taking the case where the target DMRS type parameter can be that the DMRS type is type 1, FL DMRS=2, and the target first uplink data transmission layer is RI=5 as an example, the network device determines, from 12 first DMRS port configuration tables, the first DMRS port configuration tables corresponding to different DMRS parameter types in the case of RI=5 as the candidate first DMRS port configuration tables. The candidate first DMRS port configuration tables include:
a first DMRS port configuration table 1 corresponding to RI=5, DMRS type of type 1 and FL DMRS=2;
a first DMRS port configuration table 2 corresponding to RI=5, DMRS type of type 2 and FL DMRS=1;
a first DMRS port configuration table 3 corresponding to RI=5, DMRS type of type 2 and FL DMRS=2.

Further, the network device determines the target first DMRS port configuration table from the candidate first DMRS port configuration tables based on the target DMRS type parameter. Continuing with the above-mentioned example, the determined candidate first DMRS port configuration tables include: the first DMRS port configuration table 1, the first DMRS port configuration table 2 and the first DMRS port configuration table 3. Since RI=5 corresponds to the first DMRS port configuration table 1, the first DMRS port configuration table 1 is determined to be the target first DMRS port configuration table.

In step S45, one or more DMRS ports allocated for the PUSCH transmission are determined based on the target first DMRS port configuration table.

After the target first DMRS port configuration table is determined, one or more DMRS ports in the target first DMRS port configuration table are determined as the one or more DMRS ports allocated for the PUSCH transmission. Continuing with the above-mentioned example, the target first DMRS port configuration table is the first DMRS port configuration table 1, with reference to table 1, DMRS ports 0-4 can be determined as the DMRS ports allocated for the PUSCH transmission.

In step S46, the one or more DMRS ports are indicated to the terminal.

Optionally, the one or multiple DMRS ports allocated for the PUSCH transmission can be indicated to the terminal by means of a DMRS port indication field in the downlink control information (DCI) signaling. In some implementations, DCI0-1/0-2 may be employed to indicate, to the terminal, the one or multiple DMRS ports allocated for the PUSCH transmission.

The DMRS port indication field in the DCI includes a port index value for indicating port index values of the one or more DMRS ports. Optionally, the port index value is a row index of one target DMRS port configuration sub-table. Or the port index value is an index offset, and an actual port index value may be determined based on a starting index value and the row offset.

Optionally, the one or multiple DMRS ports allocated for the PUSCH transmission are indicated to the terminal via a DMRS port indication field in the DCI, in which the multiple DMRS ports may be a combination of DMRS ports. In some implementations, the DMRS port indication field indicates the number of bits used by the one or multiple DMRS ports, as determined by the number of total entries occupied by the DMRS port configuration table. For example, for DMRS type of type 1, FL DMRS=2, and the number of entries in the DMRS port allocation table corresponding to RANK5-8 is sixteen, namely, the DMRS port indication field in the DCI can be indicated by 4 bits.

Optionally, the first DMRS port configuration table may have the same table format and the same configuration entries as the DMRS port configuration table configured for RI=1/2/3/4. That is, the number of bits occupied by the DMRS port indication field in the DCI are the same as the number of bits used for indicating the one or multiple DMRS ports in the DMRS port configuration table corresponding to the second uplink data transmission layer.

With the method for indicating a DMRS port provided in the embodiments of the present application, when the maximum number of uplink data transmission layers supported by the single terminal is eight, the DMRS port configuration table is configured for the first uplink data transmission layer based on a DMRS type, and one or more required DMRS ports are allocated for the PUSCH transmission based on the configured DMRS port configuration table. In the embodiments of the present application, a plurality of configuration modes for configuring the DMRS port configuration table for the newly added uplink data transmission layer are provided, and a blank space of configuring the required DMRS port configuration table for the newly added uplink data transmission layer is filled, so as to provide a basis for enhancing an uplink sending capability. Moreover, the terminal can be allocated with the required DMRS port for the PUSCH transmission based on the configured DMRS port configuration table, which is beneficial to avoid the conflict between the PUSCH and the DMRSs of other scheduled terminals.

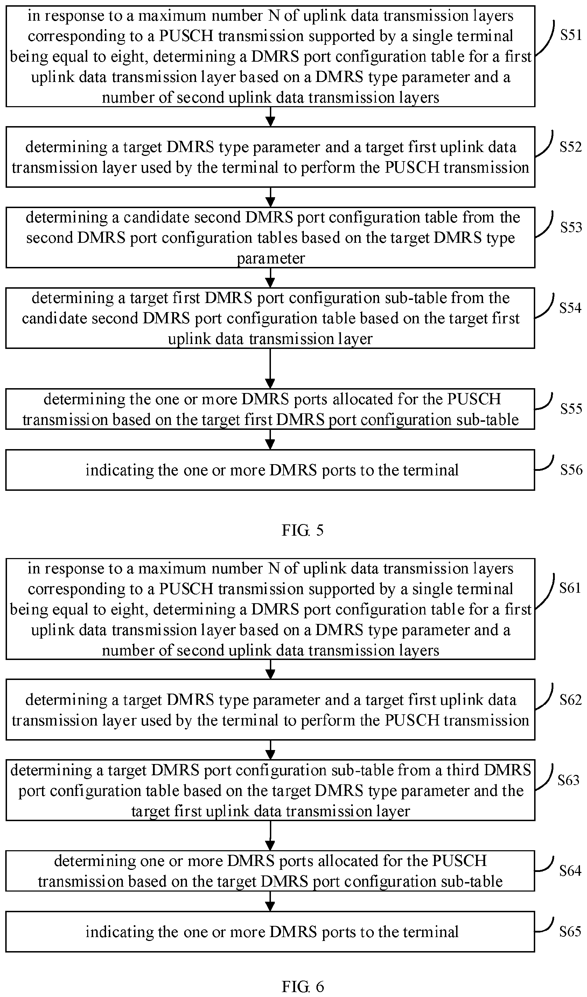

Reference is now made to FIG 5, which is a schematic flowchart of a method for indicating a DMRS port provided by an embodiment of the present application. As shown in FIG 5, the method is performed by a network device, and may include, but is not limited to, the following steps.

In step S51, in response to a maximum number N of uplink data transmission layers corresponding to a PUSCH transmission supported by a single terminal being equal to eight, a DMRS port configuration table is determined for a first uplink data transmission layer based on a DMRS type parameter and a number of second uplink data transmission layers.

The DMRS port allocation set defined for the first uplink data transmission layer is included in the DMRS port configuration table.

For each DMRS type parameter, a second DMRS port configuration table corresponding to the DMRS type parameter is generated, in which the second DMRS port configuration table includes a first DMRS port configuration sub-table of each first uplink data transmission layer. That is, each DMRS type parameter corresponds to one second DMRS port configuration table, and each second DMRS port configuration table includes respective first DMRS port configuration sub-tables of the first uplink data transmission layers with RI=5, RI=6, RI=7 and RI=8.

Optionally, the second DMRS port configuration table may have the same table format and the same configuration entries as the original DMRS port configuration table configured for RI=1/2/3/4.

Optionally, a total number of second DMRS port configuration tables is three.

In step S52, a target DMRS type parameter and a target first uplink data transmission layer used by the terminal to perform the PUSCH transmission are determined.

The specific implementation of step S52 in the embodiment of the present application can be realized by using any implementation in the various embodiments of the present application, for which the relevant content can be referred to for details, and it will not be described in detail here.

Optionally, the network device may explicitly or implicitly determine the target DMRS type parameter and the target first uplink data transmission layer used by the terminal to perform the PUSCH transmission, which may be, for example, based on protocol agreements or upper layer indications.

Optionally, the network device may explicitly or implicitly indicate the target DMRS type parameter and/or the target first uplink data transmission layer to the terminal.

In step S53, a candidate second DMRS port configuration table is determined from a second DMRS port configuration table based on the target DMRS type parameter.

In step S54, a target first DMRS port configuration sub-table is determined from the candidate second DMRS port configuration table based on the target first uplink data transmission layer.

In some implementations, the network device determines, from a plurality of configured second DMRS port configuration tables, a second DMRS port configuration table corresponding to the DMRS type parameter being the target DMRS type parameter as the candidate second DMRS port configuration table.

By way of example, taking the case where the target DMRS type parameter can be that the DMRS type is type 1, FL DMRS=2, and the target first uplink data transmission layer is RI=5 as an example, the network device determines, from three second DMRS port configuration tables, the second DMRS port configuration table 1 corresponding to the case that the DMRS type is type 1 and FL DMRS=2 as the candidate second DMRS port configuration table.

Further, the network device determines the target first DMRS port configuration sub-table from the candidate second DMRS port configuration table based on the target first uplink data transmission layer. Since the candidate second DMRS port configuration table includes the first DMRS port configuration sub-tables with RI=5, RI=6, RI=7 and RI=8, the network device can determine a first DMRS port configuration sub-table corresponding to the target first uplink data transmission layer as the target first DMRS port configuration sub-table.

Continuing with the above-mentioned example, the candidate second DMRS port configuration table includes: the first DMRS port configuration sub-table 1 corresponding to RI=5, the first DMRS port configuration sub-table 2 corresponding to RI=6, the first DMRS port configuration sub-table 3 corresponding to RI=7, and the first DMRS port configuration sub-table 4 corresponding to RI=8. Since the target first uplink data transmission layer is RI=5, the first DMRS port configuration sub-table 1 corresponding to RI=5 is determined to be the target first DMRS port configuration sub-table.

In step S55, one or more DMRS ports allocated for the PUSCH transmission are determined based on the target first DMRS port configuration sub-table.

After the target first DMRS port configuration sub-table is determined, one or more DMRS ports in the target first DMRS port configuration sub-table are determined as the one or more DMRS ports allocated for the PUSCH transmission. Continuing with the above-mentioned example, the target first DMRS port configuration sub-table is the first DMRS port configuration sub-table 1, with reference to table 5, DMRS ports 0-4 can be determined as the DMRS ports allocated for the PUSCH transmission.

In step S56, the one or more DMRS ports are indicated to the terminal.

Optionally, the one or multiple DMRS ports allocated for the PUSCH transmission can be indicated to the terminal by means of a DMRS port indication field in the downlink control information (DCI) signaling. The multiple DMRS ports may be a combination of DMRS ports. The DMRS port indication field in the DCI includes a port index value for indicating port index values of the one or more DMRS ports. Optionally, the port index value is a row index of one target DMRS port configuration sub-table. Or the port index value is an index offset, and an actual port index value may be determined based on a starting index value and the row offset.

For a description on indicating the DMRS port(s) allocated for the PUSCH transmission to the terminal via the DMRS port indication field in the DCI, reference is now made to the relevant contents in various embodiments of the present application, and the description thereof will not be repeated here.

With the method for indicating a DMRS port provided in the embodiments of the present application, when the maximum number of uplink data transmission layers supported by the single terminal is eight, the DMRS port configuration table is configured for the first uplink data transmission layer based on a DMRS type, and one or more required DMRS ports are allocated for the PUSCH transmission based on the configured DMRS port configuration table. In the embodiments of the present application, a plurality of configuration modes for configuring the DMRS port configuration table for the first uplink data transmission layer are provided, and a blank space of configuring the required DMRS port configuration table for the first uplink data transmission layer is filled, so as to provide a basis for enhancing an uplink sending capability. Moreover, the terminal can be allocated with the required DMRS port for the PUSCH transmission based on the configured DMRS port configuration table, which is beneficial to avoid the conflict between the PUSCH and the DMRSs of other scheduled terminals.

Reference is now made to FIG 6, which is a schematic flowchart of a method for indicating a DMRS port provided by an embodiment of the present application. As shown in FIG 6, the method is performed by a network device, and may include, but is not limited to, the following steps.

In step S61, in response to a maximum number N of uplink data transmission layers corresponding to a PUSCH transmission supported by a single terminal being equal to eight, a DMRS port configuration table is determined for a first uplink data transmission layer based on a DMRS type parameter and a number of second uplink data transmission layers.

The DMRS port allocation set defined for the first uplink data transmission layer is included in the DMRS port configuration table.

A sum third DMRS port configuration table is generated, and optionally, the third DMRS port configuration table includes a second DMRS port configuration sub-table of each first uplink data transmission layer for each DMRS type parameter; optionally, the third DMRS port configuration table includes a third DMRS port configuration sub-table corresponding to each DMRS type parameter for each first uplink data transmission layer. That is, for RI> 4, regarding the first uplink data transmission layers with RI=5/6/7/8, the third DMRS port configuration table may be looked up.

Optionally, the third DMRS port configuration table has the same or a different table format compared to the original DMRS port configuration table configured for RI=1/2/3/4, and/or has different configuration entries from the configuration entries included in the original DMRS port configuration table configured for RI=1/2/3/4. The total number of entries included in the third DMRS port configuration table is thirty two.

In step S62, a target DMRS type parameter and a target first uplink data transmission layer used by the terminal to perform the PUSCH transmission are determined.

The specific implementation of step S62 in the embodiment of the present application can be realized by using any implementation in the various embodiments of the present application, for which the relevant content can be referred to for details, and it will not be described in detail here.

Optionally, the network device may explicitly or implicitly determine the target DMRS type parameter and the target first uplink data transmission layer used by the terminal to perform the PUSCH transmission, which may be, for example, based on protocol agreements or upper layer indications.

Optionally, the network device may explicitly or implicitly indicate the target DMRS type parameter and/or the target first uplink data transmission layer to the terminal.

**In** step S63, a target DMRS port configuration sub-table is determined from the third DMRS port configuration table based on the target DMRS type parameter and the target first uplink data transmission layer.

The target DMRS port configuration sub-table is one second DMRS port configuration sub-table in the third DMRS port configuration table or is one third DMRS port configuration sub-table in the third DMRS port configuration table.

When the content included in the third DMRS port configuration table is the second DMRS port configuration sub-table of each first uplink data transmission layer for the DMRS type parameter, a candidate second DMRS port configuration sub-table can be determined from the third DMRS port configuration table based on the target DMRS type parameter as the candidate DMRS port configuration sub-table. Further, a target second DMRS port configuration sub-table is determined from the determined candidate second DMRS port configuration sub-table based on the target first uplink data transmission layer as the target DMRS port configuration sub-table.

When the content included in the third DMRS port configuration table is the third DMRS port configuration sub-table corresponding to each DMRS type parameter for the first uplink data transmission layer, a candidate third DMRS port configuration sub-table can be determined from the third DMRS port configuration table based on the target first uplink data transmission layer as the candidate DMRS port configuration sub-table. Further, a target third DMRS port configuration sub-table is determined from the determined candidate third DMRS port configuration sub-table based on the target DMRS type parameter as the target DMRS port configuration sub-table.

An exemplary description can be found in the description of the related contents of the above-described embodiments, which will not be described in detail herein.

In step S64, one or more DMRS ports allocated for the PUSCH transmission are determined based on the target DMRS port configuration sub-table.

After the target DMRS port configuration sub-table is determined, one or more DMRS ports in the target DMRS port configuration sub-table are determined as the one or more DMRS ports allocated for the PUSCH transmission.

In step S65, the one or more DMRS ports are indicated to the terminal.

Optionally, the one or multiple DMRS ports can be indicated to the terminal by means of a DMRS port indication field in the downlink control information (DCI) signaling. The multiple DMRS ports may be a combination of DMRS ports. The DMRS port indication field in the DCI includes a port index value for indicating port index values of the one or more DMRS ports. Optionally, the port index value is a row index of one target DMRS port configuration sub-table. Or the port index value is an index offset, and an actual port index value may be determined based on a starting index value and the row offset.

Optionally, the number of entries in the DMRS port allocation table corresponding to RI=5/6/7/8 may decide the number of bits indicating the ports in the DCI. For example, for the case where the DMRS type is type 1, FL DMRS=2, and the number of entries in the DMRS port allocation table corresponding to RANK5-8 is thirty two, the DMRS port indication field in the DCI can be indicated by 8 bits. That is, when the DMRS port configuration table is the third DMRS port configuration table, the number of bits of the DMRS port indication field is greater than the number of bits used for indicating the one or multiple DMRS ports in the DMRS port configuration table corresponding to the second uplink data transmission layer.

With the method for indicating a DMRS port provided in the embodiments of the present application, when the maximum number of uplink data transmission layers supported by the single terminal is eight, the DMRS port configuration table is configured for the first uplink data transmission layer based on a DMRS type, and one or more required DMRS ports are allocated for the PUSCH transmission based on the configured DMRS port configuration table. In the embodiments of the present application, a plurality of configuration modes for configuring the DMRS port configuration table for the newly added uplink data transmission layer are provided, and a blank space of configuring the required DMRS port configuration table for the newly added uplink data transmission layer is filled, so as to provide a basis for enhancing an uplink sending capability. Moreover, the terminal can be allocated with the required DMRS port for the PUSCH transmission based on the configured DMRS port configuration table, which is beneficial to avoid the conflict between the PUSCH and the DMRSs of other scheduled terminals.

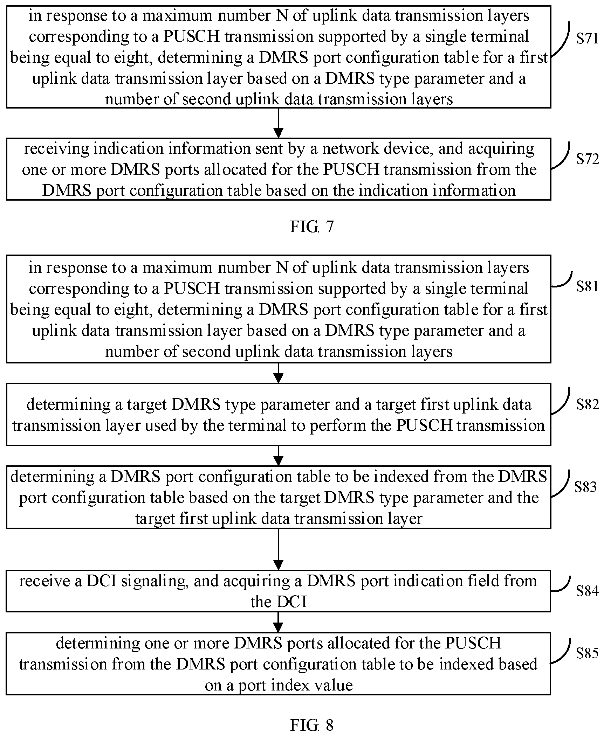

Reference is now made to FIG 7, which is a schematic flowchart of a method for indicating a DMRS port provided by an embodiment of the present application. As shown in FIG 7, the method is performed by a terminal, and may include, but is not limited to, the following steps.

In step S71, in response to a maximum number N of uplink data transmission layers corresponding to a PUSCH transmission supported by a single terminal being equal to eight, a DMRS port configuration table is determined for a first uplink data transmission layer based on a DMRS type parameter and a number of second uplink data transmission layers.

The DMRS port allocation set defined for the first uplink data transmission layer is included in the DMRS port configuration table.

The description of the DMRS type parameter and the first uplink data transmission layer in the embodiments of the present application can be seen from the relevant contents in various embodiments of the present application, and will not be repeated here.

Optionally, a DMRS port allocation set defined for the first uplink data transmission layer is included in the DMRS port configuration table. The DMRS port allocation set includes one DMRS port or multiple DMRS ports available for the first uplink data transmission layer. The multiple DMRS ports may be a combination of DMRS ports.

Optionally, one or more parameters of the DMRS type parameter may also be included in the DMRS port configuration table, for example, the DMRS type can be included, or the maximum number of symbols of the front-load DMRS can be included, or the DMRS type and the maximum number of symbols of the front-load DMRS can be included.

Optionally, the DMRS port configuration table may also include a quantity of code division multiplexings (CDMs) that do not carry data.

Optionally, the number of table rows, i.e. the value of the row, in the DMRS port configuration table may be used to index to one or more DMRS ports.

As a possible implementation, for each first uplink data transmission layer, first DMRS port configuration tables respectively corresponding to different DMRS type parameters may be generated for the first uplink data transmission layer. That is, for each first uplink data transmission layer, a plurality of first DMRS port configuration tables may be configured, in which each first DMRS port configuration table corresponds to one DMRS type parameter.

Optionally, the first DMRS port configuration table may have the same table format and the same configuration entries as the original DMRS port configuration table configured for RI=1/2/3/4.

Optionally, a total number of first DMRS port configuration tables is ten.

Optionally, the number of entries in the DMRS port allocation table corresponding to RI=5/6/7/8 may decide the number of bits indicating the ports in the downlink control information (DCI). For example, for a case where the DMRS type is type 1, FL DMRS=2, and the number of entries in the DMRS port allocation table corresponding to RANK5-8 is sixteen, then a DMRS port indication field in the DCI can be indicated by 4 bits. In some implementations, DCI0-1/0-2 may be employed to indicate the ports to the terminal.

As another possible implementation, for each DMRS type parameter, a second DMRS port configuration table corresponding to the DMRS type parameter is generated, the second DMRS port configuration table includes a first DMRS port configuration sub-table of each first uplink data transmission layer. That is, each DMRS type parameter corresponds to one second DMRS port configuration table, and each second DMRS port configuration table includes respective first DMRS port configuration sub-tables of the first uplink data transmission layers with RI=5, RI=6, RI=7 and RI=8.

Optionally, the second DMRS port configuration table may have the same table format and the same configuration entries as the original DMRS port configuration table configured for RI=1/2/3/4.

Optionally, a total number of second DMRS port configuration tables is three.

Optionally, the number of entries in the DMRS port allocation table corresponding to RI=5/6/7/8 may decide the number of bits indicating the ports in the DCI. For example, for the case where the DMRS type is type 1, FL DMRS=2, and the number of entries in the DMRS port allocation table corresponding to RANK5-8 is sixteen, the DMRS port indication field in the DCI can be indicated by 4 bits. In some implementations, DCI0-1/0-2 may be employed to indicate the ports to the terminal.

As yet another possible implementation, a sum third DMRS port configuration table is generated, and optionally, the third DMRS port configuration table includes a second DMRS port configuration sub-table of each first uplink data transmission layer for each DMRS type parameter; optionally, the third DMRS port configuration table includes a third DMRS port configuration sub-table corresponding to each DMRS type parameter for each first uplink data transmission layer. That is, for RI> 4, regarding the first uplink data transmission layers with RI=5/6/7/8, the third DMRS port configuration table may be looked up.

Optionally, the third DMRS port configuration table has the same or a different table format compared to the original DMRS port configuration table configured for RI=1/2/3/4, and/or has different configuration entries from the configuration entries included in the original DMRS port configuration table configured for RI=1/2/3/4. The total number of entries included in the third DMRS port configuration table is thirty two.

Optionally, the number of entries in the DMRS port allocation table corresponding to RI=5/6/7/8 may decide the number of bits indicating the ports in the DCI. For example, for the case where the DMRS type is type 1, FL DMRS=2, and the number of entries in the DMRS port allocation table corresponding to RANK5-8 is thirty two, the DMRS port indication field in the DCI can be indicated by 8 bits. In some implementations, DCI0-1/0-2 may be employed to indicate the ports to the terminal.

An exemplary description of the above-described implementation can be found in the description of the related contents of the above-described embodiments, which will not be described in detail herein.

In step S72, indication information sent by a network device is received, and one or more DMRS ports allocated for the PUSCH transmission are acquired from the DMRS port configuration table based on the indication information.

After determining to allocate one DMRS port or a combination of DMRS ports for the PUSCH transmission, the network device indicates the DMRS port(s) allocated for the PUSCH transmission to the terminal via a DMRS port indication, so that the terminal uses the one DMRS port or the combination of DMRS ports to perform the PUSCH transmission with the network device.

Optionally, the network device can indicate, to the terminal, the one DMRS port or the combination of DMRS ports allocated for the PUSCH transmission by means of a DMRS port indication field in the downlink control indication (DCI) signaling. Accordingly, the terminal may receive the DCI, obtain the DMRS port indication field from the DCI, and determine the one or more DMRS ports allocated for the PUSCH transmission.

The DMRS port indication field indicates the number of bits used by the one DMRS port or the combination of DMRS ports, as determined by the number of total entries occupied by the DMRS port configuration table. In some implementations, DCI0-1/0-2 may be employed to indicate, to the terminal, the one DMRS port or the combination of DMRS ports allocated for the PUSCH transmission.

With the method for indicating the DMRS port provided in the embodiments of the present application, when the maximum number of uplink data transmission layers supported by the single terminal is eight, the DMRS port configuration table is configured for the first uplink data transmission layer based on the DMRS type, and one or more required DMRS ports are allocated for the PUSCH transmission based on the configured DMRS port configuration table. In the embodiments of the present application, a plurality of configuration modes for configuring the DMRS port configuration table for a newly added uplink data transmission layer are provided, and a blank space of configuring the required DMRS port configuration table for the newly added uplink data transmission layer is filled, so as to provide a basis for enhancing an uplink sending capability. Moreover, the terminal can be allocated with the required DMRS port for the PUSCH transmission based on the configured DMRS port configuration table, which is beneficial to avoid the conflict between the PUSCH and the DMRSs of other scheduled terminals.

Reference is now made to FIG 8, which is a schematic flowchart of a method for indicating a DMRS port provided by an embodiment of the present application. As shown in FIG 8, the method is performed by a terminal, and may include, but is not limited to, the following steps.

In step S81, in response to a maximum number N of uplink data transmission layers corresponding to a PUSCH transmission supported by a single terminal being equal to eight, a DMRS port configuration table is determined for a first uplink data transmission layer based on a DMRS type parameter and a second uplink data transmission layer.

The DMRS port allocation set defined for the first uplink data transmission layer is included in the DMRS port configuration table.

The specific implementation of step S31 in the embodiment of the present application can be realized by using any implementation in the various embodiments of the present application, for which the relevant content can be referred to for details, and it will not be described in detail here.

In step S82, a target DMRS type parameter and a target first uplink data transmission layer used by the terminal to perform the PUSCH transmission are determined.

The description of the DMRS type parameter and the first uplink data transmission layer in the embodiments of the present application can be seen from the relevant contents in various embodiments of the present application, and will not be repeated here.

In the embodiment of the present application, the terminal adopts one of the above-mentioned type parameters when performing the PUSCH transmission, and the first uplink data transmission layer used is one layer of the newly added layers with RI=5, RI=6, RI=7 and RI=8. For example, the target DMRS type parameter may be that the DMRS type is type 1, FL DMRS=2; and RI=5, i.e. the newly added 5th uplink data transmission layer.

Optionally, the terminal may explicitly or implicitly determine the target DMRS type parameter and the target first uplink data transmission layer used to perform the PUSCH transmission.

In step S83 a DMRS port configuration table to be indexed is determined from the DMRS port configuration table based on the target DMRS type parameter and the target first uplink data transmission layer

As a possible implementation, the DMRS port configuration table is a first DMRS port configuration table, since there are multiple first DMRS port configuration tables, a target first DMRS port configuration table can be determined from the multiple first DMRS port configuration tables based on the target DMRS type parameter and the target first uplink data transmission layer as the DMRS port configuration table to be indexed.

As another possible implementation, the DMRS port configuration table is a second DMRS port configuration table, since there are multiple second DMRS port configuration tables, and the second DMRS port configuration table also includes first DMRS port configuration sub-tables of four layers of RI=5/6/7/8. In an embodiment of the present application, the target first DMRS port configuration sub-table can be determined from the multiple second DMRS port configuration tables based on the target DMRS type parameter and the target first uplink data transmission layer as the DMRS port configuration table to be indexed.

As yet another possible implementation, in the case where the DMRS port configuration table is a third DMRS port configuration table, in an embodiment of the present application, a target second DMRS port configuration sub-table or a third DMRS port configuration sub-table can be determined from the third DMRS port configuration table based on the target DMRS type parameter and the target first uplink data transmission layer as the DMRS port configuration table to be indexed.

When the content included in the third DMRS port configuration table is in the form of the second DMRS port configuration sub-table of each first uplink data transmission layer for the DMRS type parameter, a second DMRS port configuration sub-table can be determined from the third DMRS port configuration table as the DMRS port configuration table to be indexed.

When the content included in the third DMRS port configuration table is in the form of the third DMRS port configuration sub-table corresponding to each DMRS type parameter for the first uplink data transmission layer, a third DMRS port configuration sub-table can be determined from the third DMRS port configuration table as the DMRS port configuration table to be indexed.

An exemplary description of the above-described implementation can be found in the description of the related contents of the above-described embodiments, which will not be described in detail herein.

In step S84, a downlink control information (DCI) signaling is received, and a DMRS port indication field is acquired from the DCI.

The port indication field includes a port index value, and the port index value is used for indexing one or more DMRS ports allocated for the PUSCH transmission.

Optionally, the one DMRS port or the combination of ports allocated for the PUSCH transmission are indicated to the terminal by means of the DMRS port indication field in the DCI. Optionally, DCI0-1/0-2 may be employed to indicate, to the terminal, the one DMRS port or the combination of ports allocated for the PUSCH transmission.

Optionally, the number of bits occupied by the port indication field is agreed by a protocol or configured by the network or agreed by a protocol through the DMRS type parameter. In some implementations, the DMRS port indication field indicates the number of bits used by the one or more DMRS ports, as determined by the number of total entries occupied by the DMRS port configuration table.

In step S85, one or more DMRS ports allocated for the PUSCH transmission are determined from the DMRS port configuration table to be indexed based on the port index value.

The port index value is obtained and one DMRS port or the combination of ports allocated for the PUSCH transmission can be determined from the DMRS port configuration table to be indexed. In some implementations, indexing is performed on the DMRS port configuration table to be indexed based on a port index value to determine the one DMRS port or the combination of ports therefrom; optionally, in other implementations, a starting index value of a predefined table is determined, an actual port index value is determined according to the port index value and the starting index value, and the one DMRS port or the combination of ports is determined by performing indexing on the DMRS port configuration table to be indexed based on the actual port index value.

With the method for indicating a DMRS port provided in the embodiments of the present application, when the maximum number of uplink data transmission layers supported by the single terminal is eight, the DMRS port configuration table is configured for the first uplink data transmission layer based on a DMRS type, and one or more required DMRS ports are allocated for the PUSCH transmission based on the configured DMRS port configuration table. In the embodiments of the present application, a plurality of configuration modes for configuring the DMRS port configuration table for the newly added uplink data transmission layer are provided, and a blank space of configuring the required DMRS port configuration table for the newly added uplink data transmission layer is filled, so as to provide a basis for enhancing an uplink sending capability. Moreover, the terminal can be allocated with the required DMRS port for the PUSCH transmission based on the configured DMRS port configuration table, which is beneficial to avoid the conflict between the PUSCH and the DMRSs of other scheduled terminals.

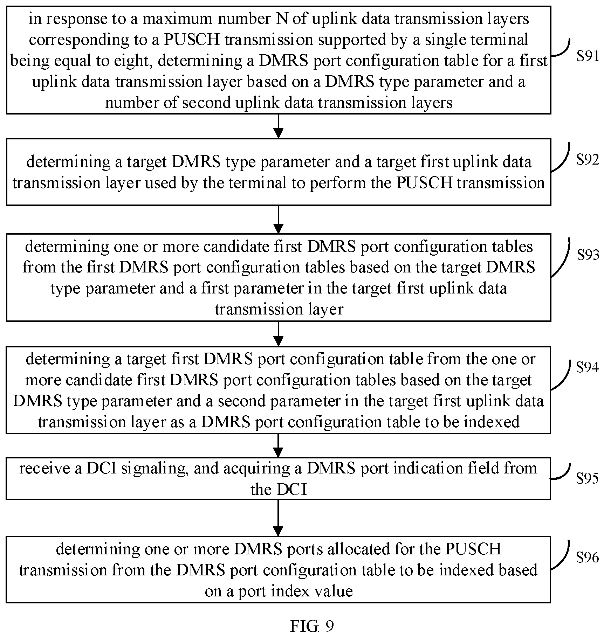

Reference is now made to FIG 9, which is a schematic flowchart of a method for indicating a DMRS port provided by an embodiment of the present application. As shown in FIG 9, the method is performed by a terminal, and may include, but is not limited to, the following steps.

In step S91, in response to a maximum number N of uplink data transmission layers corresponding to a PUSCH transmission supported by a single terminal being equal to eight, a DMRS port configuration table is determined for a first uplink data transmission layer based on a DMRS type parameter and a number of second uplink data transmission layers.

The DMRS port allocation set defined for the first uplink data transmission layer is included in the DMRS port configuration table.

Optionally, each first uplink data transmission layer, first DMRS port configuration tables respectively corresponding to different DMRS type parameters may be generated for the first uplink data transmission layer. That is, each first uplink data transmission layer may be configured with a plurality of first DMRS port configuration tables, in which each first DMRS port configuration table corresponds to one DMRS type parameter.

Optionally, the first DMRS port configuration table may have the same table format and the same configuration entries as the original DMRS port configuration table configured for RI=1/2/3/4.

Optionally, a total number of first DMRS port configuration tables is ten.

In step S92, a target DMRS type parameter and a target first uplink data transmission layer used by the terminal to perform the PUSCH transmission are determined.

The specific implementation of step S92 in the embodiment of the present application can be realized by using any implementation in the various embodiments of the present application, for which the relevant content can be referred to for details, and it will not be described in detail here.

In step S93, one or more candidate first DMRS port configuration tables are determined from the first DMRS port configuration tables based on the target DMRS type parameter and a first parameter in the target first uplink data transmission layer.

In step S94, a target first DMRS port configuration table is determined from the one or more candidate first DMRS port configuration tables based on the target DMRS type parameter and a second parameter in the target first uplink data transmission layer as a DMRS port configuration table to be indexed.

In some implementations, the terminal determines, from the first DMRS port configuration table, the first DMRS port configuration tables of different RIs corresponding to the DMRS type parameter being the target DMRS type parameter as the one or more candidate first DMRS port configuration tables. Further, the terminal determines the target first DMRS port configuration table from the one or more candidate first DMRS port configuration tables based on the target first uplink data transmission layer as the DMRS port configuration table to be indexed.

In other implementations, the terminal determines the first DMRS port configuration tables corresponding to different DMRS type parameters for the target first uplink data transmission layer from the first DMRS port configuration tables as the candidate first DMRS port configuration tables. Further, the terminal determines the target first DMRS port configuration table from the candidate first DMRS port configuration tables based on the target DMRS type parameter as the DMRS port configuration table to be indexed.

An exemplary description of the above-described implementation can be found in the description of the related contents of the above-described embodiments, which will not be described in detail herein.

In step S95, a downlink control information (DCI) signaling is received, and a DMRS port indication field is acquired from the DCI.

Note that the one DMRS port or the combination of ports allocated for the PUSCH transmission are indicated to the terminal by means of a DMRS port indication field in the DCI. In some implementations, the DMRS port indication field indicates the number of bits used by the one or multiple DMRS ports, as determined by the number of total entries occupied by the DMRS port configuration table. For example, for DMRS type of type 1, FL DMRS=2, and the number of entries in the DMRS port allocation table corresponding to RANK5-8 is sixteen, namely, the DMRS port indication field in the DCI can be indicated by 4 bits.

In step S96, one or more DMRS ports allocated for the PUSCH transmission are determined from the DMRS port configuration table to be indexed based on the port index value.

The specific implementations of step S95 and step S96 in the embodiments of the present application can be realized by using any implementation in the various embodiments of the present application, for which the relevant content can be referred to for details, and it will not be described in detail here.

With the method for indicating a DMRS port provided in the embodiments of the present application, when the maximum number of uplink data transmission layers supported by the single terminal is eight, the DMRS port configuration table is configured for the first uplink data transmission layer based on a DMRS type, and one or more required DMRS ports are allocated for the PUSCH transmission based on the configured DMRS port configuration table. In the embodiments of the present application, a plurality of configuration modes for configuring the DMRS port configuration table for the newly added uplink data transmission layer are provided, and a blank space of configuring the required DMRS port configuration table for the newly added uplink data transmission layer is filled, so as to provide a basis for enhancing an uplink sending capability. Moreover, the terminal can be allocated with the required DMRS port for the PUSCH transmission based on the configured DMRS port configuration table, which is beneficial to avoid the conflict between the PUSCH and the DMRSs of other scheduled terminals.

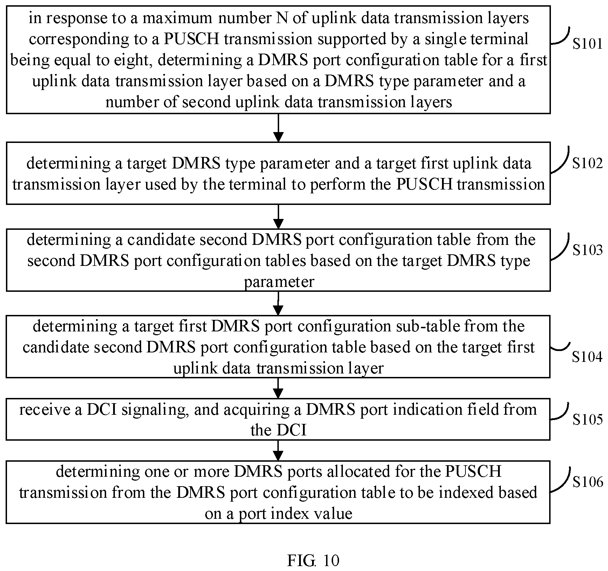

Reference is now made to FIG 10, which is a schematic flowchart of a method for indicating a DMRS port provided by an embodiment of the present application. As shown in FIG 10, the method is performed by a terminal, and may include, but is not limited to, the following steps.

In step S101, in response to a maximum number N of uplink data transmission layers corresponding to a PUSCH transmission supported by a single terminal being equal to eight, a DMRS port configuration table is determined for a first uplink data transmission layer based on a DMRS type parameter and a number of second uplink data transmission layers.

The DMRS port allocation set defined for the first uplink data transmission layer is included in the DMRS port configuration table.

For each DMRS type parameter, a second DMRS port configuration table corresponding to the DMRS type parameter is generated, in which the second DMRS port configuration table includes a first DMRS port configuration sub-table of each first uplink data transmission layer. That is, each DMRS type parameter corresponds to one second DMRS port configuration table, and each second DMRS port configuration table includes respective first DMRS port configuration sub-tables of the first uplink data transmission layers with RI=5, RI=6, RI=7 and RI=8.

Optionally, the second DMRS port configuration table may have the same table format and the same configuration entries as the original DMRS port configuration table configured for RI=1/2/3/4.

Optionally, a total number of second DMRS port configuration tables is three.

In step S102, a target DMRS type parameter and a target first uplink data transmission layer used by the terminal to perform the PUSCH transmission are determined.

The specific implementation method of step S102 in the embodiment of the present application can be realized by using any implementation in the various embodiments of the present application, for which the relevant content can be referred to for details, and it will not be described in detail here.

In step S103, a candidate second DMRS port configuration table is determined from a second DMRS port configuration table based on the target DMRS type parameter.

In step S104, a target first DMRS port configuration sub-table is determined from the candidate second DMRS port configuration table based on the target first uplink data transmission layer.

In some implementations, the terminal determines, from a plurality of configured second DMRS port configuration tables, a second DMRS port configuration table corresponding to the DMRS type parameter being the target DMRS type parameter as the candidate second DMRS port configuration table. Further, the terminal determines the target first DMRS port configuration sub-table from the candidate second DMRS port configuration table based on the target first uplink data transmission layer. Since the candidate second DMRS port configuration table includes the first DMRS port configuration sub-tables with RI=5, RI=6, RI=7 and RI=8, the network device can determine a first DMRS port configuration sub-table corresponding to the target first uplink data transmission layer as the target first DMRS port configuration sub-table, namely, a DMRS port configuration table to be indexed.

An exemplary description of the above-described implementation can be found in the description of the related contents of the above-described embodiments, which will not be described in detail herein.

In step S105, a downlink control information (DCI) signaling is received, and a DMRS port indication field is acquired from the DCI.

Note that the one DMRS port or the combination of ports allocated for the PUSCH transmission are indicated to the terminal by means of a DMRS port indication field in the DCI. In some implementations, the DMRS port indication field indicates the number of bits used by the one or multiple DMRS ports, as determined by the number of total entries occupied by the DMRS port configuration table. For example, for DMRS type of type 1, FL DMRS=2, and the number of entries in the DMRS port allocation table corresponding to RANK5-8 is sixteen, namely, the DMRS port indication field in the DCI can be indicated by 4 bits.

In step S106, one or more DMRS ports allocated for the PUSCH transmission are determined from the DMRS port configuration table to be indexed based on the port index value.

The specific implementations of step S105 and step S106 in the embodiments of the present application can be realized by using any implementation in the various embodiments of the present application, for which the relevant content can be referred to for details, and it will not be described in detail here.

With the method for indicating a DMRS port provided in the embodiments of the present application, when the maximum number of uplink data transmission layers supported by the single terminal is eight, the DMRS port configuration table is configured for the first uplink data transmission layer based on a DMRS type, and one or more required DMRS ports are allocated for the PUSCH transmission based on the configured DMRS port configuration table. In the embodiments of the present application, a plurality of configuration modes for configuring the DMRS port configuration table for the newly added uplink data transmission layer are provided, and a blank space of configuring the required DMRS port configuration table for the newly added uplink data transmission layer is filled, so as to provide a basis for enhancing an uplink sending capability. Moreover, the terminal can be allocated with the required DMRS port for the PUSCH transmission based on the configured DMRS port configuration table, which is beneficial to avoid the conflict between the PUSCH and the DMRSs of other scheduled terminals.

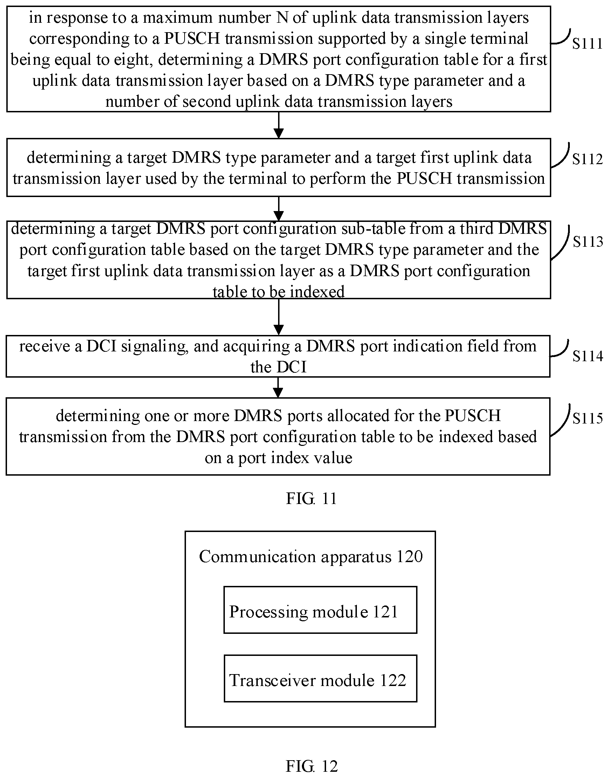

Reference is now made to FIG 11, which is a schematic flowchart of a method for indicating a DMRS port provided by an embodiment of the present application. As shown in FIG 11, the method is performed by a terminal, and may include, but is not limited to, the following steps.

In step S111, in response to a maximum number N of uplink data transmission layers corresponding to a PUSCH transmission supported by a single terminal being equal to eight, a DMRS port configuration table is determined for a first uplink data transmission layer based on a DMRS type parameter and a number of second uplink data transmission layers.

The DMRS port allocation set defined for the first uplink data transmission layer is included in the DMRS port configuration table.

A sum third DMRS port configuration table is generated, and optionally, the third DMRS port configuration table includes a second DMRS port configuration sub-table of each first uplink data transmission layer for each DMRS type parameter; optionally, the third DMRS port configuration table includes a third DMRS port configuration sub-table corresponding to each DMRS type parameter for each first uplink data transmission layer. That is, for RI> 4, regarding the first uplink data transmission layers with RI=5/6/7/8, the third DMRS port configuration table may be looked up.

Optionally, the third DMRS port configuration table has the same or a different table format compared to the original DMRS port configuration table configured for RI=1/2/3/4, and/or has different configuration entries from the configuration entries included in the original DMRS port configuration table configured for RI=1/2/3/4. The total number of entries included in the third DMRS port configuration table is thirty two.

In step S112, a target DMRS type parameter and a target first uplink data transmission layer used by the terminal to perform the PUSCH transmission are determined.

The specific implementation method of step S102 in the embodiment of the present application can be realized by using any implementation in the various embodiments of the present application, for which the relevant content can be referred to for details, and it will not be described in detail here.

In step S113, a target DMRS port configuration sub-table is determined from the third DMRS port configuration table based on the target DMRS type parameter and the target first uplink data transmission layer as a DMRS port configuration table to be indexed

The target DMRS port configuration sub-table is one second DMRS port configuration sub-table in the third DMRS port configuration table or is one third DMRS port configuration sub-table in the third DMRS port configuration table.

When the content included in the third DMRS port configuration table is the second DMRS port configuration sub-table of each first uplink data transmission layer for the DMRS type parameter, a candidate second DMRS port configuration sub-table can be determined from the third DMRS port configuration table based on the target DMRS type parameter as the candidate DMRS port configuration sub-table. Further, a target second DMRS port configuration sub-table is determined from the determined candidate second DMRS port configuration sub-table based on the target first uplink data transmission layer as the target DMRS port configuration sub-table, namely, the DMRS port configuration table to be indexed.

When the content included in the third DMRS port configuration table is the third DMRS port configuration sub-table corresponding to each DMRS type parameter for the first uplink data transmission layer, a candidate third DMRS port configuration sub-table can be determined from the third DMRS port configuration table based on the target first uplink data transmission layer as the candidate DMRS port configuration sub-table. Further, a target third DMRS port configuration sub-table is determined from the determined candidate third DMRS port configuration sub-table based on the target DMRS type parameter as the target DMRS port configuration sub-table, namely, the DMRS port configuration table to be indexed.

An exemplary description can be found in the description of the related contents of the above-described embodiments, which will not be described in detail herein.

In step S114, a downlink control information (DCI) signaling is received, and a DMRS port indication field is acquired from the DCI.

Note that, optionally, the number of entries in the DMRS port allocation table corresponding to RI=5/6/7/8 may decide the number of bits indicating the ports in the DCI. For example, for the case where the DMRS type is type 1, FL DMRS=2, and the number of entries in the DMRS port allocation table corresponding to RANK5-8 is thirty two, the DMRS port indication field in the DCI can be indicated by 8 bits. That is, when the DMRS port configuration table is the third DMRS port configuration table, the number of bits of the DMRS port indication field is greater than the number of bits used for indicating the one or multiple DMRS ports in the DMRS port configuration table corresponding to the second uplink data transmission layer.

In step S115, one or more DMRS ports allocated for the PUSCH transmission are determined from the DMRS port configuration table to be indexed based on the port index value.

The specific implementations of step S105 and step S106 in the embodiments of the present application can be realized by using any implementation in the various embodiments of the present application, for which the relevant content can be referred to for details, and it will not be described in detail here.

With the method for indicating a DMRS port provided in the embodiments of the present application, when the maximum number of uplink data transmission layers supported by the single terminal is eight, the DMRS port configuration table is configured for the first uplink data transmission layer based on a DMRS type, and one or more required DMRS ports are allocated for the PUSCH transmission based on the configured DMRS port configuration table. In the embodiments of the present application, a plurality of configuration modes for configuring the DMRS port configuration table for the newly added uplink data transmission layer are provided, and a blank space of configuring the required DMRS port configuration table for the newly added uplink data transmission layer is filled, so as to provide a basis for enhancing an uplink sending capability. Moreover, the terminal can be allocated with the required DMRS port for the PUSCH transmission based on the configured DMRS port configuration table, which is beneficial to avoid the conflict between the PUSCH and the DMRSs of other scheduled terminals.

In the above-mentioned embodiments provided by the present application, the method provided by the embodiments of the present application is introduced from the perspective of the terminal and the network device, respectively. In order to realize various functions in the method provided by the above-mentioned embodiments of the present application, the terminal and the network device may include a hardware structure and a software module, and implement the above-mentioned various functions in the form of a hardware structure, a software module or a hardware structure plus a software module. Some of the functions described above may be performed by hardware structures, software modules, or hardware structures plus software modules.

Reference is now made to FIG 12, which is a schematic block diagram of a communication apparatus 120 provided in an embodiment of the present application. The communication apparatus 120 shown in FIG 12 can include a processing module 121 and a transceiver module 122. The transceiver module 122 can include a transmitting module and/or a receiving module, the transmitting module is used or realizing a transmitting function, the receiving module is used for realizing a receiving function, and the transceiver module 122 can realize the transmitting function and/or the receiving function.

The communication apparatus 120 can be a terminal, or an apparatus in the terminal, or an apparatus which can be matched with the terminal. Optionally, the communication apparatus 120 can be a network device, or an apparatus in the network device, or an apparatus which can be matched with the network device.

The communication apparatus 120 is a network device, and includes:
a processing module 121 configured for, in response to a maximum number N of uplink data transmission layers corresponding to a physical uplink shared channel (PUSCH) transmission supported by a single terminal being equal to eight, determining a DMRS port configuration table for a first uplink data transmission layer based on a DMRS type parameter, in which the DMRS port configuration table includes a DMRS port allocation set defined for the first uplink data transmission layer; and
a transceiver module 122 configured for indicating, based on the DMRS port configuration table, one or more DMRS ports allocated for the PUSCH transmission to the terminal.

Optionally, the processing module 121 is further configured for: for each first uplink data transmission layer, generating first DMRS port configuration tables respectively corresponding to different DMRS type parameters.

Optionally, the processing module 121 is further configured for, for each DMRS type parameter, generating a second DMRS port configuration table corresponding to the DMRS type parameter, in which the second DMRS port configuration table includes a first DMRS port configuration sub-table of each first uplink data transmission layer.

Optionally, the processing module 121 is further configured for: generating a sum third DMRS port configuration table, in which the third DMRS port configuration table includes contents in the form of one of the groups consisting of: a second DMRS port configuration sub-table of each first uplink data transmission layer corresponding to each DMRS type parameter; and a third DMRS port configuration sub-table of each DMRS type parameter for each first uplink data transmission layer.

Optionally, the transceiver module 122 is further configured for: determining a target DMRS type parameter and a target first uplink data transmission layer used by the terminal to perform the PUSCH transmission; determining, based on the target DMRS type parameter and the target first uplink data transmission layer, the one or more DMRS ports allocated for the PUSCH transmission; and indicating the one or more DMRS ports to the terminal.

Optionally, the transceiver module 122 is further configured for: in response to the DMRS port configuration table being a first DMRS port configuration table, determining one or more candidate first DMRS port configuration tables from the first DMRS port configuration tables based on the target DMRS type parameter and a first parameter in the target first uplink data transmission layer; determining a target first DMRS port configuration table from the one or more candidate first DMRS port configuration tables based on the target DMRS type parameter and a second parameter in the target first uplink data transmission layer; and determining, based on the target first DMRS port configuration table, the one or more DMRS ports allocated for the PUSCH transmission.

Optionally, the transceiver module 122 is further configured for: in response to the DMRS port configuration table being a second DMRS port configuration table, determining a candidate second DMRS port configuration table from second DMRS port configuration tables based on the target DMRS type parameter; determining a target first DMRS port configuration sub-table from the one or more candidate second DMRS port configuration tables based on the target first uplink data transmission layer; and determining, based on the target first DMRS port configuration sub-table, the one or more DMRS ports allocated for the PUSCH transmission.

Optionally, the transceiver module 122 is further configured for: in response to the DMRS port configuration table being a third DMRS port configuration table, determining a candidate second target DMRS port configuration sub-table from the third DMRS port configuration table based on the target DMRS type parameter; determining a target second DMRS port configuration sub-table from the candidate second DMRS port configuration sub-table based on the target first uplink data transmission layer, and determining one or more DMRS ports allocated for the PUSCH transmission based on the target second DMRS port configuration sub-table; or determining a candidate third target DMRS port configuration sub-table from the third DMRS port configuration table based on the target first uplink data transmission layer; determining a target third DMRS port configuration sub-table from the candidate third DMRS port configuration sub-table based on the target DMRS type parameter, and determining one or more DMRS ports allocated for the PUSCH transmission based on the target third DMRS port configuration sub-table.

Optionally, the transceiver module 122 is further configured for: indicating the one or more DMRS ports to the terminal via a DMRS port indication field in a downlink control information (DCI) signaling, in which the port indication field includes port index values of the one or more DMRS ports.

Optionally, in response to the target DMRS port configuration table being a first DMRS port configuration table or a second DMRS port configuration table, a number of bits occupied by the port indication field is the same as a number of bits used for indicating one or more DMRS ports in a DMRS port configuration table corresponding to a second uplink data transmission layer.

Optionally, in response to the target DMRS port configuration table being a third DMRS port configuration table, a number of bits of the DMRS port indication field is greater than a number of bits used for indicating the one DMRS port or a combination of ports in the DMRS port configuration table of the second uplink data transmission layer.

Optionally, the number of bits occupied by the port indication field is agreed by a protocol or configured by network or agreed by a protocol through the DMRS type parameter.

Optionally, the transceiver module 122 is further configured for: indicating the target DMRS type parameter and the target first uplink data transmission layer to the terminal.

Optionally, the transceiver module 122 is further configured for: indicating the target first uplink data transmission layer to the terminal explicitly or implicitly.

Optionally, the DMRS port configuration table includes a maximum number of symbols of a front-load DMRS corresponding to the DMRS type parameter and/or a DMRS mapping type.

The communication apparatus 120 is a terminal, and includes:
a processing module 121 configured for, in response to a maximum number N of uplink data transmission layers corresponding to a physical uplink shared channel (PUSCH) transmission supported by the terminal being equal to eight, determining a DMRS port configuration table for a first uplink data transmission layer based on a DMRS type parameter and a number of second uplink data transmission layers, in which the DMRS port configuration table includes a DMRS port allocation set defined for the first uplink data transmission layer; and
a transceiver module 122 configured for receiving indication information sent by a network device, and acquiring, based on the indication information, one or more DMRS ports allocated for the PUSCH transmission of the terminal from the DMRS port configuration table.

Optionally, the processing module 121 is further configured for: for each layer of the first uplink data transmission layer, generating first DMRS port configuration tables respectively corresponding to different DMRS type parameters.

Optionally, the processing module 121 is further configured for, for each DMRS type parameter, generating a second DMRS port configuration table corresponding to the DMRS type parameter, in which the second DMRS port configuration table includes a first DMRS port configuration sub-table of each first uplink data transmission layer.

Optionally, the processing module 121 is further configured for: generating a sum third DMRS port configuration table, in which the third DMRS port configuration table includes contents in the form of one of the groups consisting of: a second DMRS port configuration sub-table of each first uplink data transmission layer corresponding to each DMRS type parameter; and a third DMRS port configuration sub-table of each DMRS type parameter for each first uplink data transmission layer.

Optionally, the transceiver module 122 is further configured for: determining a target DMRS type parameter and a target first uplink data transmission layer used by the terminal to perform the PUSCH transmission.

Optionally, the transceiver module 122 is further configured for: determining the target first uplink data transmission layer explicitly or implicitly.

Optionally, the transceiver module 122 is further configured for: receiving a downlink control information (DCI) signaling, and acquiring a DMRS port indication field from the DCI, in which the port indication field includes a port index value, and the port index value is used for indexing the one or more DMRS ports allocated for the PUSCH transmission; determining a DMRS port configuration table to be indexed from the DMRS port configuration table based on the target DMRS type parameter and the target first uplink data transmission layer; and determining the one or more DMRS ports from the DMRS port configuration table to be indexed based on the port index value.

Optionally, the transceiver module 122 is further configured for: in response to the DMRS port configuration table being a first DMRS port configuration table, determining one or more candidate first DMRS port configuration tables from the first DMRS port configuration tables based on the target DMRS type parameter and a first parameter in the target first uplink data transmission layer; and determining a target first DMRS port configuration table from the one or more candidate first DMRS port configuration tables based on the target DMRS type parameter and a second parameter in the target first uplink data transmission layer as the DMRS port configuration table to be indexed.

Optionally, the transceiver module 122 is further configured for: in response to the DMRS port configuration table being a second DMRS port configuration table, determining a candidate second DMRS port configuration table from second DMRS port configuration tables based on the target DMRS type parameter; and determining a target first DMRS port configuration sub-table from the candidate second DMRS port configuration table based on the target first uplink data transmission layer as the DMRS port configuration table to be indexed.

Optionally, the transceiver module 122 is further configured for: in response to the DMRS port configuration table being a third DMRS port configuration table, determining a candidate second target DMRS port configuration sub-table from the third DMRS port configuration table based on the target DMRS type parameter; determining a target second DMRS port configuration sub-table from the candidate second DMRS port configuration sub-table based on the target first uplink data transmission layer as the DMRS port configuration table to be indexed, and determining one or more DMRS ports allocated for the PUSCH transmission based on the target second DMRS port configuration sub-table; or determining a candidate third target DMRS port configuration sub-table from the third DMRS port configuration table based on the target first uplink data transmission layer; and determining a target third DMRS port configuration sub-table from the candidate third DMRS port configuration sub-table based on the target DMRS type parameter as the DMRS port configuration table to be indexed, and determining one or more DMRS ports allocated for the PUSCH transmission based on the target third DMRS port configuration sub-table.

Optionally, the transceiver module 122 is further configured for: directly performing indexing on the DMRS port configuration table to be indexed based on the port index value to determine the one or more DMRS ports; or determining a starting index value of a predefined table, determining an actual port index value according to the port index value and the starting index value, and performing indexing on the DMRS port configuration table to be indexed based on the actual port index value to determine the one or more DMRS ports.

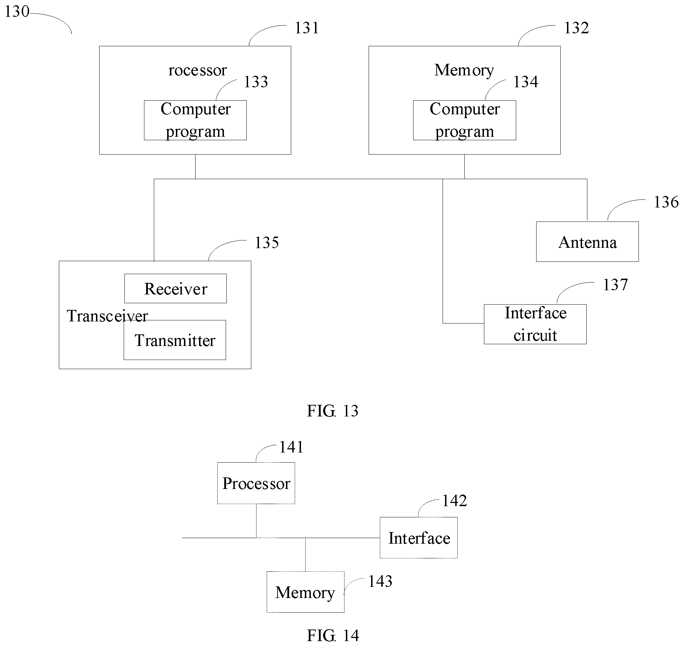

Reference is now made to FIG 13, which is a schematic structural diagram of another communication apparatus 130 provided in an embodiment of the present application. The communication apparatus 130 can be a terminal, or a network device, or a chip, a chip system or a processor, etc. supporting the network device to realize the above-mentioned method, or a chip, a ship system or a processor, etc. supporting the network device to realize the above-mentioned method. This apparatus can be used for realizing the method described in the above-mentioned method embodiment, and can specifically refer to the description for the above-mentioned method embodiment.

The communication apparatus 130 can include one or more processors 131. The processor 131 can be a general-purpose processor or a special-purpose processor, etc. For example, the processor can be a baseband processor or a central processor. The baseband processor can be used for processing a communication protocol and communication data, and the central processor can be used for controlling a communication apparatus (such as a base station, a baseband chip, a terminal, a terminal chip, and a DU or a CU), executing a computer program, and processing data of the computer program.

Optionally, the communication apparatus 130 can further include one or more memories 132 in which a computer program 134 can be stored, and the processor 131 executes the computer program 134, such that the communication apparatus 130 executes the method described in the above-mentioned method embodiment. Optionally, the memory 132 can further store data. The communication apparatus 130 and the memory 132 can be disposed alone or integrated together.

Optionally, the communication apparatus 130 can further include a transceiver 135 and an antenna 136. The transceiver 135 can be referred to as a transceiver unit, a transceiver machine, or a transceiver circuit, etc., and is used for realizing a transceiver function. The transceiver 135 can include a receiver and a transmitter, the receiver can be referred to as a receiving machine or a receiving circuit, etc., and is used for realizing a receiving function; and the transmitter can be referred to as a transmitting machine or a transmitting circuit, etc., and is used for realizing a transmitting function.

Optionally, the communication apparatus 130 can further include one or more interface circuits 137. The interface circuit 137 is used for receiving code instructions and transmitting the code instructions to the processor 131. The processor 131 runs the code instructions, such that the communication apparatus 130 executes the method described in the above-mentioned method embodiment.

In an implementation, the processor 131 can include a transceiver used for realizing receiving and transmitting functions. For example, this transceiver can be a transceiver circuit, or an interface, or an interface circuit. The transceiver circuit, the interface or the interface circuit used for realizing the receiving and transmitting functions can be separated or integrated together. The above-mentioned transceiver circuit, interface or interface circuit can be used for reading and writing codes/data, or the above-mentioned transceiver circuit, interface or interface circuit can be used for transmitting or delivering signals.

In an implementation, the processor 131 can store a computer program 133, and the computer program 133 runs on the processor 131, such that the communication apparatus 130 executes the method described in the above-mentioned method embodiment. The computer program 133 may be solidified in the processor 131, in this case, the processor 131 may be realized by hardware.

In an implementation, the communication apparatus 130 can include a circuit which can realize the transmitting or receiving or communication function in the above-mentioned method embodiment. The processor and the transceiver that are described in the present application can be realized on an integrated circuit (IC), an analog IC, a radio frequency integrated circuit (RFIC), a mixed signal IC, an application specific integrated circuit (ASIC), a printed circuit board (PCB), an electronic device, etc. This processor and the transceiver can also be made by using various IC process technologies, such as a complementary metal oxide semiconductor (CMOS), an nMetal-oxide-semiconductor (NMOS), a positive channel metal oxide semiconductor (PMOS), a bipolar junction transistor (BJT), a bipolar CMOS (BiCMOS), silicon germanium (SiGe), and gallium arsenide (GaAs).

The communication apparatus described in above embodiment can be a transmitting device or a receiving device (such as the receiving device in the above-mentioned method embodiment), however, the scope of the communication apparatus described in the present application is not limited thereto, and it is possible that the structure of the communication apparatus is not limited by figure 13. The communication apparatus can be an independent device or a part of a larger device. For example, the communication apparatus can be:
(1) an independent integrated circuit (IC), or a chip, or a chip system, or a subsystem;
(2) a set provided with one or more ICs, and optionally, this set of the ICs can also include a storage component used for storing data and a computer program;
(3) an ASIC, such as a Modem;
(4) a module that can be embedded into other devices;
(5) a receiver, a terminal, a smart terminal, a cell phone, a wireless device, a handset, a mobile unit, a vehicle-mounted device, a network device, a cloud device, an artificial smart device, etc.; and
(6) other devices, etc.

A situation that the communication apparatus can be a chip or a chip system can refer to the schematic structural diagram of a chip shown in FIG 14. The chip shown in FIG 14 includes a processor 141 and an interface 142. There may be one or more processors 141, and there may be a plurality of interfaces 142.

Optionally, the chip further includes a memory 143, in which the memory 143 is used for storing a necessary computer program and data.

It can be further known by the skilled in the art that various illustrative logical blocks and steps listed in the embodiments of the present application can be realized through electronic hardware, computer software or a combination thereof. Whether such a function is realized by hardware or software depends on a specific application and design requirements of a whole system. For each specific application, a person skilled in the art can realize the function by using various methods, however, such a realization should be understood as falling within the protection scope of the embodiments of the present application.

Embodiments of the present application also provide a DMRS port indication system including a communication apparatus as a terminal such as a terminal in the aforementioned method embodiment and a communication apparatus as a network devices in the aforementioned embodiment of figure 12, or the system includes a communication apparatus as a terminal such as the terminal in the aforementioned method embodiment and a communication apparatus as a network devices in the aforementioned embodiment of figure 13.

The present application further provides a computer-readable storage medium having instructions stored thereon, and the instructions, when executed by a computer, realize the function in any one of the above-mentioned method embodiments.

The present application further provides a computer program product which, when executed by a computer, realizes the function in any one of the above-mentioned method embodiments.

The above-mentioned embodiments can be entirely or partially realized through software, hardware, firmware or any combinations thereof. When realized by using the software, the embodiments can be entirely or partially realized in a form of a computer program product. The computer program product includes one or more computer programs. When the computer programs are loaded and executed on a computer, processes or functions based on the embodiments of the present application are entirely or partially generated. The computer can be a general-purpose computer, a special-purpose computer, a computer network, or other programmable apparatuses. The computer programs can be stored in a computer-readable storage medium, or transmitted from one computer-readable storage medium to another computer-readable storage medium, for example, the computer programs can be transmitted from one website, computer, server or data center to another website, computer, server or data center in a wired (such as a coaxial cable, an optical fiber, and a digital subscriber line (DSL)) or wireless (such as infrared, wireless, and microwave) manner. The computer-readable storage medium can be any available medium that can be accessed by the computer or an integrated data storage device such as a server and a data center including one or more available media. The available medium can be a magnetic medium (such as floppy disk, a hard disk, and a cassette), an optical medium (such as a high-density digital video disc (DVD)), or a semiconductor medium (such as a solid-state disk (SSD)), etc.

It can be understood by those of ordinary skilled in the art that various digital numbers such as first and second involved in the present application are only for distinguishing for facilitating description, are not intended to limit the scope of the embodiments of the present application, but also denote a chronological order.

At least one in the present application can be described as one or more, a plurality of can be two, three, four or more, which is not limited in the present application. In the embodiments of the present application, for a technical feature, technical features in such a technical feature are distinguished by "first", "second", "third", "A", "B", "C", "D", etc., and there are no chronological or size order among the technical features described by the "first", "second", "third", "A", "B", "C", and "D".

A corresponding relationship shown in each table in the present application can be configured or predefined. A value of information in each table is only illustrative, and other values can be configured, which is not limited in the present application. When a corresponding relationship between the information and each parameter is configured, it is not necessarily required to configure all corresponding relationships shown in each table. For example, in the tables in the present application, it is also possible that corresponding relationships shown in certain lines are not configured. For another example, appropriate deformation adjustment, such as splitting and merging, can be made based on the above-mentioned tables. Names of parameters shown in titles in each of the above-mentioned tables can also adopt other names that can be understood by the communication apparatus, and the values or expressions of the parameters thereof can also adopt other values or expressions that can be understood by the communication apparatus. During implementation, each of the above-mentioned tables can also adopt other data structures, such as arrays, queues, containers, stacks, linear tables, pointers, linked lists, trees, graphs, structures, classes, heaps, and hash tables or Hash tables.

Pre-definition in the present application can be understood as definition, preliminary definition, storage, pre-storage, pre-negotiation, pre-configuration, solidification, or pre-burning.

Those of ordinary skill in the art can realize that units and algorithm steps in all examples described in conjunction with the embodiments disclosed in the present application can be realized by electronic hardware, computer software or a combination of both. Whether these functions are realized by hardware or software depends on specific applications and design constraints of technical solutions. The skilled in the art can adopt different methods to realize the described functions in each specific application, which, however, should be considered as falling within the scope of the present application.

It can be clearly known by the skilled in the art that, for facilitating and simplifying the description, specific working processes of the above-mentioned system, apparatus and unit can refer to corresponding processes in the above-mentioned method embodiments so as to be no longer repeated herein.

The above descriptions are only specific implementations of the present application, but the protection scope of the present application is not limited thereto. Any variations or replacements that can be readily envisioned by those skilled in the art within the technical scope disclosed by the present application should fall within the protection scope of the present application. Therefore, the protection scope of the present application should be subject to the protection scope defined in the claims.

## Claims

1. A method for indicating a demodulation reference signal (DMRS) port, wherein the method is applicable to a network device, and the method comprises:
in response to a maximum number N of uplink data transmission layers corresponding to a physical uplink shared channel (PUSCH) transmission supported by a single terminal being equal to eight, determining a DMRS port configuration table for a first uplink data transmission layer based on a DMRS type parameter, wherein the DMRS port configuration table comprises a DMRS port allocation set defined for the first uplink data transmission layer; and
indicating, based on the DMRS port configuration table, one or more DMRS ports allocated for the PUSCH transmission to the terminal.

2. The method according to claim 1, wherein determining the DMRS port configuration table for the first uplink data transmission layer based on the DMRS type parameter comprises:
for each first uplink data transmission layer, generating first DMRS port configuration tables respectively corresponding to different DMRS type parameters.

3. The method according to claim 1, wherein determining the DMRS port configuration table for the first uplink data transmission layer based on the DMRS type parameter comprises:
for each DMRS type parameter, generating a second DMRS port configuration table corresponding to the DMRS type parameter, wherein the second DMRS port configuration table comprises a first DMRS port configuration sub-table of each first uplink data transmission layer.

4. The method according to claim 2 or 3, wherein indicating, based on the DMRS port configuration table, the one or more DMRS ports allocated for the PUSCH transmission to the terminal comprises:
determining a target DMRS type parameter and a target first uplink data transmission layer used by the terminal to perform the PUSCH transmission;
determining, based on the target DMRS type parameter and the target first uplink data transmission layer, the one or more DMRS ports allocated for the PUSCH transmission; and
indicating the one or more DMRS ports to the terminal.

5. The method according to claim 4, wherein determining, based on the target DMRS type parameter and the target first uplink data transmission layer, the one or more DMRS ports allocated for the PUSCH transmission comprises:
in response to the DMRS port configuration table being a first DMRS port configuration table, determining one or more candidate first DMRS port configuration tables from the first DMRS port configuration tables based on the target DMRS type parameter and a first parameter in the target first uplink data transmission layer;
determining a target first DMRS port configuration table from the one or more candidate first DMRS port configuration tables based on the target DMRS type parameter and a second parameter in the target first uplink data transmission layer; and
determining, based on the target first DMRS port configuration table, the one or more DMRS ports allocated for the PUSCH transmission.

6. The method according to claim 4, wherein determining, based on the target DMRS type parameter and the target first uplink data transmission layer, the one or more DMRS ports allocated for the PUSCH transmission comprises:
in response to the DMRS port configuration table being a second DMRS port configuration table, determining one or more candidate second DMRS port configuration tables from second DMRS port configuration tables based on the target DMRS type parameter;
determining a target first DMRS port configuration sub-table from the one or more candidate second DMRS port configuration tables based on the target first uplink data transmission layer; and
determining, based on the target first DMRS port configuration sub-table, the one or more DMRS ports allocated for the PUSCH transmission.

7. The method according to claim 4, wherein indicating the one or more DMRS ports to the terminal comprises:
indicating the one or more DMRS ports to the terminal via a DMRS port indication field in a downlink control information (DCI) signaling, wherein the port indication field comprises port index values of the one or more DMRS ports.

8. The method according to claim 7, further comprising:
in response to the target DMRS port configuration table being a first DMRS port configuration table or a second DMRS port configuration table, a number of bits occupied by the port indication field is the same as a number of bits used for indicating one or more DMRS ports in a DMRS port configuration table corresponding to a second uplink data transmission layer.

9. The method according to claim 7, wherein the number of bits occupied by the port indication field is agreed by a protocol or configured by network or agreed by a protocol through the DMRS type parameter.

10. The method according to claim 4, wherein after determining the target DMRS type parameter and the target first uplink data transmission layer used by the terminal to perform the PUSCH transmission, the method further comprises:
indicating the target DMRS type parameter and the target first uplink data transmission layer to the terminal.

11. The method according to claim 10, further comprising:
indicating the target first uplink data transmission layer to the terminal explicitly or implicitly.

12. The method according to claim 1, wherein the DMRS port configuration table comprises a maximum number of symbols of a front-load DMRS corresponding to the DMRS type parameter and/or a DMRS mapping type.

13. A method for indicating a demodulation reference signal (DMRS) port, wherein the method is applicable to a terminal, and the method comprises:
in response to a maximum number N of uplink data transmission layers corresponding to a physical uplink shared channel (PUSCH) transmission supported by the terminal being equal to eight, determining a DMRS port configuration table for a first uplink data transmission layer based on a DMRS type parameter, wherein the DMRS port configuration table comprises a DMRS port allocation set defined for the first uplink data transmission layer; and
receiving indication information sent by a network device, and acquiring, based on the indication information, one or more DMRS ports allocated for the PUSCH transmission of the terminal from the DMRS port configuration table.

14. The method according to claim 13, wherein generating the DMRS port configuration table for the first uplink data transmission layer based on the DMRS type parameter comprises:
for each layer of the first uplink data transmission layer, generating first DMRS port configuration tables respectively corresponding to different DMRS type parameters.

15. The method according to claim 13, wherein generating the DMRS port configuration table for the first uplink data transmission layer based on the DMRS type parameter comprises:
for each DMRS type parameter, generating a second DMRS port configuration table corresponding to the DMRS type parameter, wherein the second DMRS port configuration table comprises a first DMRS port configuration sub-table of each first uplink data transmission layer.

16. The method according to any one of claim 14 or 15, wherein before receiving the indication information sent by the network device, and acquiring, based on the indication information, the DMRS port allocated for the PUSCH transmission of the terminal from the DMRS port configuration table, the method further comprises:
determining a target DMRS type parameter and a target first uplink data transmission layer used by the terminal to perform the PUSCH transmission.

17. The method according to claim 16, further comprising:
determining the target first uplink data transmission layer explicitly or implicitly.

18. The method according to claim 16, wherein receiving the indication information sent by the network device comprises:
receiving a downlink control information (DCI) signaling, and acquiring a DMRS port indication field from the DCI, wherein the port indication field comprises a port index value, and the port index value is used for indexing the one or more DMRS ports allocated for the PUSCH transmission;
determining a DMRS port configuration table to be indexed from the DMRS port configuration table based on the target DMRS type parameter and the target first uplink data transmission layer; and
determining the one or more DMRS ports from the DMRS port configuration table to be indexed based on the port index value.

19. The method according to claim 18, wherein determining the DMRS port configuration table to be indexed from the DMRS port configuration table based on the target DMRS type parameter and the target first uplink data transmission layer comprises:
in response to the DMRS port configuration table being a first DMRS port configuration table, determining one or more candidate first DMRS port configuration tables from the first DMRS port configuration tables based on the target DMRS type parameter and a first parameter in the target first uplink data transmission layer; and
determining a target first DMRS port configuration table from the one or more candidate first DMRS port configuration tables based on the target DMRS type parameter and a second parameter in the target first uplink data transmission layer as the DMRS port configuration table to be indexed.

20. The method according to claim 18, wherein determining the DMRS port configuration table to be indexed from the DMRS port configuration table based on the target DMRS type parameter and the target first uplink data transmission layer comprises:
in response to the DMRS port configuration table being a second DMRS port configuration table, determining a candidate second DMRS port configuration table from second DMRS port configuration tables based on the target DMRS type parameter; and
determining a target first DMRS port configuration sub-table from the candidate second DMRS port configuration table based on the target first uplink data transmission layer as the DMRS port configuration table to be indexed.

21. The method according to claim 18, wherein determining the one or more DMRS ports from the DMRS port configuration table to be indexed based on the port index value comprises:
directly performing indexing on the DMRS port configuration table to be indexed based on the port index value to determine the one or more DMRS ports; or
determining a starting index value of a predefined table, determining an actual port index value according to the port index value and the starting index value, and performing indexing on the DMRS port configuration table to be indexed based on the actual port index value to determine the one or more DMRS ports.

22. A communication apparatus, comprising:
a processing module configured to, in a maximum number N of uplink data transmission layers corresponding to physical uplink shared channel (PUSCH) transmission supported by a single terminal being equal to eight, determine a DMRS port configuration table for a first uplink data transmission layer based on a DMRS type parameter, wherein the DMRS port configuration table comprises a DMRS port allocation set defined for the first uplink data transmission layer; and
a transceiver module configured to indicate, based on the DMRS port configuration table, one or more DMRS ports allocated for the PUSCH transmission to the terminal.

23. A communication apparatus, comprising:
a processing module configured to, in a maximum number N of uplink data transmission layers corresponding to physical uplink shared channel (PUSCH) transmission supported by the terminal being equal to eight, determine a DMRS port configuration table for a first uplink data transmission layer based on a DMRS type parameter, wherein the DMRS port configuration table comprises a DMRS port allocation set defined for the first uplink data transmission layer; and
a transceiver module configured to receive indication information sent by a network device, and acquire, based on the indication information, one or more DMRS ports allocated for the PUSCH transmission of the terminal from the DMRS port configuration table.

24. A communication apparatus, comprising a processor and a memory, the memory having stored therein a computer program, the processor executing the computer program stored in the memory to cause the communication apparatus to perform the method according to any one of claims 1 to 12.

25. A communication apparatus, comprising a processor and a memory, the memory having stored therein a computer program, the processor executing the computer program stored in the memory to cause the communication apparatus to perform the method according to any one of claims 13 to 21.

26. A communication apparatus, comprising: a processor and an interface circuit; wherein
the interface circuit is configured for receiving code instructions and transmitting the code instructions to the processor; and
the processor is configured for executing the code instructions to perform the method according to any one of claims 1 to 12.

27. A communication apparatus, comprising: a processor and an interface circuit; wherein
the interface circuit is configured for receiving code instructions and transmitting the code instructions to the processor; and
the processor is configured for executing the code instructions to perform the method according to any one of claims 13 to 21.

28. A computer-readable storage medium, configured for storing instructions which, when executed, cause the method according to any one of claims 1 to 12 to be implemented.

29. A computer-readable storage medium, configured for storing instructions which, when executed, cause the method according to any one of claims 13 to 21 to be implemented.
